# EUROPEAN PATENT SPECIFICATION

(11) **EP 4 456 064 B1**
(45) Date of publication and mention of the grant of the patent: **02.09.2026**
(21) Application number: 23864485.0
(22) Date of filing: 24.07.2023
(51) Int. Cl.: G10L 21/0208, G10L 21/0232, G10L 21/0264, G10L 25/18, G10L 25/24, G10L 25/30

(54) **AUDIO DATA PROCESSING METHODS AND APPARATUSES**
AUDIODATENVERARBEITUNGSVERFAHREN UND -VORRICHTUNGEN
PROCÉDÉS ET APPAREILS DE TRAITEMENT DE DONNÉES AUDIO

(30) Priority: 13.09.2022 CN 202211110666
(43) Date of publication of application: 30.10.2024
(73) Proprietor: TENCENT TECHNOLOGY (SHENZHEN) COMPANY LIMITED, Shenzhen, Guangdong 518057 (CN)
(72) Inventor: HUANG, Daiyu, Shenzhen, Guangdong 518057 (CN); BAO, Feng, Shenzhen, Guangdong 518057 (CN); LI, Yuepeng, Shenzhen, Guangdong 518057 (CN)
(74) Representative: Novagraaf International SA
(86) International application number: PCT/CN2023/108796
(87) International publication number: WO 2024/055751

(56) References cited:
- CN-A- 1 737 906
- CN-A- 113 823 313
- CN-A- 113 838 471
- CN-A- 113 870 893
- CN-A- 113 963 715
- CN-A- 114 203 163
- JP-A- 2006 349 840
- US-A1- 2019 318 755
- WILLIAMSON DONALD S ET AL: "Estimating nonnegative matrix model activations with deep neural networks to increase perceptual speech quality", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 138, no. 3, 10 September 2015 (2015-09-10), pages 1399 - 1407, XP012200348, ISSN: 0001-4966, [retrieved on 19010101], DOI: 10.1121/1.4928612
- SUN XINGWEI ET AL: "A Model Compression Method With Matrix Product Operators for Speech Enhancement", ARXIV:1806.04885V2,, vol. 28, 13 October 2020 (2020-10-13), pages 2837 - 2847, XP011818612, DOI: 10.1109/TASLP.2020.3030495

## Description

### RELATED APPLICATION

This application claims priority to Chinese Patent Application No. 202211110666.3, entitled "AUDIO DATA PROCESSING METHOD AND APPARATUS, AND READABLE STORAGE MEDIUM" filed with the China National Intellectual Property Administration on September 13, 2022.

### FIELD OF THE TECHNOLOGY

This application relates to the field of computer technologies, and in particular, to an audio data processing method and apparatus, a device, a storage medium, and a program product.

### BACKGROUND OF THE DISCLOSURE

Currently, audio data needs to be captured in some audio/video capture service scenarios (for example, an audio/video conference scenario). However, the captured audio data is very likely to include non-stationary noise, which interferes with the target speech in the current audio data. Consequently, the quality of the captured target speech is reduced.

The non-stationary noise includes non-stationary babble noise that is associated with speaking by a plurality of speakers. Components of noise data of the non-stationary babble noise are similar to those of speech data of the target speech. Therefore, during speech enhancement on the target speech that includes the non-stationary babble noise, speech data, in the target speech, that includes speech components similar to those of the non-stationary babble noise is likely to be mistakenly eliminated. This reduces speech fidelity obtained after noise suppression is performed on the audio data. Examples for speech enhancement in view of non-stationary noise are discloseed in CN 113 838 471 A, Williamson et al: "Estimating nonnegative matrix model activations with deep neural networks to increase perceptual speech quality", JOURNAL OF THE ACOUSTICAL SOCIETY OF AMERICA, vol. 138, no. 3, 10 September 2015, pages 1399-1407, ISSN: 0001-4966, DOI: 10.1121/1.4928612, and Sun et al: "A Model Compression Method With Matrix Product Operators for Speech Enhancement", ARXIV:1806.04885V2, vol. 28, 13 October 2020, pages 2837-2847, DOI: 10.1109/ TASLP.2020.3030495.

### SUMMARY

Embodiments of this application provide an audio data processing method and apparatus, a device, a storage medium, and a program product, to effectively suppress noise data in audio data and improve speech fidelity.

The invention is set forth in the independent claims. Preferred embodiments of the invention are set forth in the dependent claims.

### BRIEF DESCRIPTION OF THE DRAWINGS

To describe the technical solutions in embodiments of this application or in the related art more clearly, the following briefly describes the accompanying drawings for describing the embodiments or the related art. Apparently, the accompanying drawings in the following description show merely some embodiments of this application, and a person of ordinary skill in the art may still derive other drawings from the accompanying drawings without creative efforts.
FIG. 1 is a schematic diagram of a system architecture according to an embodiment of this application.
FIG. 2 is a schematic diagram of a scenario of audio data processing according to an embodiment of this application.
FIG. 3 is a schematic flowchart of an audio data processing method according to an embodiment of this application.
FIG. 4a is a schematic diagram of a scenario of audio preprocessing according to an embodiment of this application.
FIG. 4b is a schematic diagram of a scenario of audio preprocessing according to an embodiment of this application.
FIG. 5 is a schematic diagram of a scenario of a differential operation on cepstrum coefficients according to an embodiment of this application.
FIG. 6 is a schematic diagram of a scenario of obtaining an interframe difference value according to an embodiment of this application.
FIG. 7 is a schematic diagram of a network structure of a mask estimation model according to an embodiment of this application.
FIG. 8 is a schematic flowchart of an audio data processing method according to an embodiment of this application.
FIG. 9 is a schematic flowchart of model training according to an embodiment of this application.
FIG. 10 is a schematic diagram of noise reduction effect according to an embodiment of this application.
FIG. 11 is a schematic structural diagram of an audio data processing apparatus according to an embodiment of this application.
FIG. 12 is a schematic structural diagram of an audio data processing apparatus according to an embodiment of this application.
FIG. 13 is a schematic structural diagram of a computer device according to an embodiment of this application.
FIG. 14 is a schematic structural diagram of an audio data processing system according to an embodiment of this application.

### DESCRIPTION OF EMBODIMENTS

The technical solutions in embodiments of this application are clearly and completely described in the following with reference to the accompanying drawings in embodiments of this application. Apparently, the described embodiments are merely some rather than all of embodiments of this application. The scope of the invention is defined by the appended claims.

Artificial intelligence (AI) refers to a theory, a method, a technology, and an application system that use a digital computer or a machine controlled by a digital computer to simulate, extend, and expand human intelligence, perceive an environment, obtain knowledge, and use the knowledge to obtain an optimal result. AI is directed to studying design principles and implementation methods of various intelligent machines, and enabling the machines to have functions of perception, reasoning, and decision-making.

A speech enhancement (SE) technology is a technology of extracting a wanted speech signal from noise background to suppress and reduce noise interference when a speech signal is interfered with or even submerged in various types of noise. In the speech enhancement technology, speech noise may be separated from non-speech noise to ensure intelligibility of speech. To be specific, raw speech as pure as possible is extracted from noisy speech.

Speech enhancement is applied to a wide range of fields, including voice calls, teleconferencing, real-time audio/video conferencing, scene recording, hearing-aid devices, speech recognition devices, and the like, and has become a preprocessing module of many speech coding and recognition systems.

Solutions provided in embodiments of this application relate to a digital signal processing (DSP) technology. It can be understood that DSP is a technology of converting analog information (for example, audio, videos, or pictures) into digital information. In the DSP technology, a computer or a dedicated processing device is used to capture, transform, filter, estimate, enhance, compress, recognize, or perform other processing on a signal in a digital form, to obtain a signal form that meets people's needs. In embodiments of this application, the DSP technology may be used for extracting a target audio feature including a target cepstrum coefficient, a first-order time derivative, a second-order time derivative, and a dynamic spectrum feature from a current audio frame.

Solutions provided in embodiments of this application further relate to a machine learning (ML) technology in the AI field. ML is a multi-field interdiscipline, and relates to a plurality of disciplines such as the probability theory, statistics, the approximation theory, convex analysis, and the algorithm complexity theory. ML specializes in studying how a computer simulates or implements a human learning behavior to obtain new knowledge or skills, and reorganize an existing knowledge structure, so as to keep improving its performance. ML is the core of AI, is a basic way to make the computer intelligent, and is applied to various fields of AI. ML generally includes technologies such as an artificial neural network, a belief network, reinforcement learning, transfer learning, inductive learning, and learning from demonstrations. In embodiments of this application, a target mask estimation model is an AI model based on the ML technology, and may be used for estimating a corresponding mask from an input audio feature.

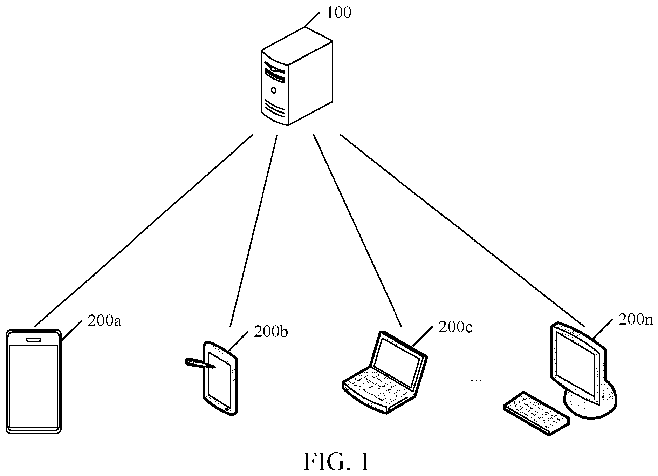

FIG. 1 is a schematic diagram of a system architecture according to an embodiment of this application. As shown in FIG. 1, the system architecture may include a service server 100 and a user terminal cluster. The user terminal cluster may include one or more user terminals. The quantity of user terminals in the user terminal cluster is not limited herein. As shown in FIG. 1, a plurality of user terminals in the user terminal cluster may specifically include a user terminal 200a, a user terminal 200b, a user terminal 200c, ..., and a user terminal 200n.

The user terminals may be communicatively connected to each other. For example, the user terminal 200a is communicatively connected to the user terminal 200b, and the user terminal 200a is communicatively connected to the user terminal 200c. In addition, any user terminal in the user terminal cluster may be communicatively connected to the service server 100, so that each user terminal in the user terminal cluster can exchange data with the service server 100 through the communication connection. For example, the user terminal 200a is communicatively connected to the service server 100. A connection mode of the communication connection is not limited. A direct or indirect connection may be established through wired communication or wireless communication or in another manner. This is not limited in this application.

It is to be understood that an application client may be installed on each user terminal in the user terminal cluster shown in FIG. 1. When running on each user terminal, the application client may exchange data with the service server 100 shown in FIG. 1. The application client may be a client with a function of displaying data information such as text, images, audio, and videos, for example, a social client, an instant messaging client (for example, a conferencing client), an entertainment client (for example, a game client or a livestreaming client), a multimedia client (for example, a video client), an information client (for example, a news client), a shopping client, an in-vehicle client, or a smart household client.

For example, in some embodiments, the application client may be a client with an audio/video communication function. The audio/video communication function herein may be a pure audio communication function or video communication function. The function may be widely used in a variety of service scenarios involving audio/video capture, for example, audio/video conferencing, audio/video calls, and audio/video livestreaming, in different fields such as enterprise office, instant communication, online education, remote medical, and digital finance. The application client may be an independent client or an embedded sub-client integrated in a client (for example, a social client or a video client). This is not limited herein.

An instant messaging client is used as an example. The service server 100 may be a collection of a plurality of servers, including a background server and a data processing server that correspond to the instant messaging client. Therefore, each user terminal may perform data transmission with the service server 100 through the instant messaging client. For example, each user terminal may capture related audio/video data in real time and transmit the captured audio/video data to other user terminals through the service server 100, to implement audio/video communication (for example, remote real-time audio/video conferencing).

It is to be understood that, in some scenarios (for example, a real-time audio/video communication scenario), audio data captured through an audio/video capture process is inevitably interfered with by external noise, especially noise including background voice (namely, babble noise). It is more difficult to eliminate interference caused by this type of noise to target speech in current audio data.

To improve quality of captured target speech, this type of noise needs to be suppressed. Based on this, embodiments of this application provide a real-time noise suppression method for audio data. In this method, DSP is effectively combined with a neural network with a nonlinear fitting capability to suppress noise data (for example, babble noise) during audio/video communication while ensuring high speech fidelity.

DSP-based speech enhancement technologies may be further classified into a single-channel speech enhancement technology and a microphone array speech enhancement technology based on different quantities of channels. The DSP-based speech enhancement technology can well cope with stationary noise during real-time online speech enhancement, but has a poor capability of suppressing non-stationary noise. However, an ML/deep learning (DL)-based speech enhancement technology has exclusive characteristics in noise suppression. This technology can reduce highly non-stationary noise and background sound, and may be used commercially for real-time communication. Therefore, an effective combination of the DSP technology and the ML/DL technology can meet requirements for both non-stationary noise suppression and real-time communication.

It is to be understood that the non-stationary noise herein is noise whose statistical properties change over time, for example, barks, noise from kitchen utensils, babies' cries, and construction or traffic noise that are captured along with target speech during audio/video capture.

In embodiments of this application, source objects of target speech may be collectively referred to as a service object (for example, a user who makes a speech during audio/video communication, also referred to as a presenter), and to-be-processed audio data associated with the service object is collectively referred to as raw audio data.

It can be understood that the raw audio data herein may be obtained by an audio device by capturing sound in a real environment in which the service object is located, and may include both speech data (namely, speech data of target speech) produced by the service object and noise data in the environment.

In embodiments of this application, the noise data is noise data of non-stationary babble noise, and may include real talking (namely, babble noise) around the service object, songs or talking carried in a multimedia file that is being played, and other similar non-stationary babble noise.

The multimedia file herein may be a video file carrying both image data and audio data, for example, a short video, TV series, a movie, a music video (MV), or an animation; or may be an audio file mainly including audio data, for example, a song, an audio book, a radio play, or a radio program. A type, content, a source, and a format of the multimedia file are not limited in embodiments of this application.

In addition, in embodiments of this application, a neural network model for performing mask estimation on an audio feature extracted from raw audio data may be referred to as a target mask estimation model.

In some embodiments, the audio device may be a hardware component disposed in a user terminal. For example, the audio device may be a microphone of the user terminal. Alternatively, in some embodiments, the audio device may be a hardware apparatus connected to a user terminal, for example a microphone connected to the user terminal, to provide the user terminal a service of obtaining raw audio data. The audio device may include an audio sensor, a microphone, and the like.

It can be understood that the method provided in embodiments of this application may be performed by a computer device. The computer device includes but is not limited to a user terminal (for example, any user terminal in the user terminal cluster shown in FIG. 1) or a service server (for example, the service server 100 shown in FIG. 1). The service server may an independent physical server, or may be a server cluster or a distributed system that includes a plurality of physical servers, or may be a cloud server that provides basic cloud computing services such as a cloud database, a cloud service, cloud computing, a cloud function, cloud storage, a network service, cloud communication, a middleware service, a domain name service, a security service, a CDN, big data, and an artificial intelligence platform. The user terminal may be a smart terminal on which the foregoing application client can be run, for example, a smartphone, a tablet computer, a notebook computer, a desktop computer, a palmtop computer, a wearable device (for example, a smart watch, a smart wristband, a smart hearing-aid device), a smart computer, or a smart in-vehicle device. The user terminal and the service server may be directly or indirectly connected in a wired or wireless manner. This is not limited in embodiments of this application.

The user terminal 200a and the user terminal 200b are used as examples for description. It is assumed that a service object 1 performs audio/video communication with a service object 2 corresponding to the user terminal 200b through an application client on the user terminal 200a (for example, the service object 1 is in a voice-only conference with the service object 2). When the service object 1 is talking, the user terminal 200a may obtain raw audio data associated with the service object 1 through a related audio device (for example, a microphone in the user terminal 200a).

In embodiments of this application, the raw audio data may be a mixed audio signal in time domain. It is difficult to directly extract a pure speech signal from the mixed audio signal in time domain. Therefore, this application focuses on separation of speech in frequency domain.

Specifically, audio preprocessing may be performed on the raw audio data to obtain a plurality of spectral frames (also referred to as audio frames in embodiments of this application) in frequency domain. Each spectral frame includes a part of a spectrum of the raw audio data in frequency domain. In embodiments of this application, any to-be-processed spectral frame of the plurality of spectral frames may be referred to as a current audio frame. Correspondingly, a spectral frame preceding the current audio frame in frequency domain may be referred to as a historical audio frame. In other words, the historical audio frame is a spectral frame obtained before the current audio frame.

Based on this, further, the user terminal 200a may obtain the current audio frame and K historical audio frames that are associated with the raw audio data, K being a positive integer. A specific quantity of historical audio frames is not limited in embodiments of this application. The current audio frame and the K historical audio frames herein are spectral frames, and each of the K historical audio frames is a spectral frame preceding the current audio frame.

To improve accuracy and intelligibility of speech separation, a plurality of audio features are used for mask estimation in this application. The current audio frame is used herein as an example for description. Processing processes for other spectral frames are the same as that for the current audio frame. Specifically, the user terminal 200a may obtain N cepstrum coefficients of the current audio frame, and then may obtain, based on the N cepstrum coefficients, M first-order time derivatives and M second-order time derivatives that are associated with the current audio frame, N being a positive integer greater than 1, and M being a positive integer less than N. A specific quantity of cepstrum coefficients, a specific quantity of first-order time derivatives, and a specific quantity of second-order time derivatives are not limited in embodiments of this application. In addition, the user terminal 200a may further obtain N historical cepstrum coefficients corresponding to each historical audio frame, and may determine, based on obtained K×N historical cepstrum coefficients, a dynamic spectrum feature associated with the current audio frame.

In embodiments of this application, a cepstrum coefficient, a first-order time derivative, a second-order time derivative, and a dynamic spectrum feature related to each spectral frame may be collectively referred to as an audio feature. An audio feature corresponding to the current audio frame may be referred to as a target audio feature. It can be understood that the target cepstrum coefficient may be used for characterizing an acoustic feature of the current audio frame, and a related first-order time derivative, second-order time derivative, and dynamic spectrum feature may be used for characterizing a feature of time correlation between audio signals (or a stability feature of audio signals). Therefore, the user terminal 200a may input the N cepstrum coefficients, the M first-order time derivatives, the M second-order time derivatives, and the dynamic spectrum feature into a trained target mask estimation model, and the target mask estimation model outputs a target mask corresponding to the current audio frame, The target mask may be used for suppressing noise data in the raw audio data to obtain enhanced audio data corresponding to the raw audio data.

To be specific, speech data and noise data in the raw audio data can be effectively separated by using an obtained mask corresponding to each spectral frame, to implement speech enhancement during audio/video communication. It can be understood that a mask obtained through modeling based on a plurality of audio features is more accurate. Therefore, speech fidelity of enhanced audio data obtained by using the mask is also high.

In embodiments of this application, the target mask may include but is not limited to an ideal ratio mask (IRM), an ideal binary mask (IBM), an optimal ratio mask (ORM), and the like. A type of the target mask is not limited herein.

It can be understood that the user terminal 200a may subsequently transmit the obtained enhanced audio data to the service server 100, and then the service server 100 delivers the enhanced audio data to the terminal device 200b. Correspondingly, it can be understood that, when service object 2 makes a speech, the terminal device 200b may also perform a speech enhancement process similar to that described above, to transmit, to the terminal device 200a, obtained enhanced audio data related to the service object 2. In this way, the service object 1 and the service object 2 can always hear high-quality speech transmitted by each other during audio/video communication. This can implement high-quality audio/video communication and improve user experience.

In some embodiments, the application client may alternatively be a client with an audio/video editing function, and may perform speech enhancement on to-be-processed raw audio data by using the function. The function may be applied to service scenarios involving audio/video capture, for example, audio/video production or audio/video recording. The raw audio data may be obtained by an audio device by recording, in real time, sound in a real environment in which a service object (which may be a target user on which speech enhancement is to be performed) is located. Alternatively, the raw audio data may be obtained from a to-be-processed multimedia file (which may include a video file and an audio file). This is not limited in embodiments of this application. Similarly, the raw audio data may alternatively be a mixed audio signal that includes speech data of the service object and noise data in the environment in which the service object is located. A process of performing speech enhancement on the raw audio data is similar to the foregoing process of speech enhancement in the audio/video communication scenario. Clearer enhanced audio data that is finally obtained may be directly stored or transmitted, or may be used for replacing raw audio data in the to-be-processed multimedia file. Compared with the real-time audio/video communication scenario, the non-real-time audio/video editing scenario has a lower requirement for real-time performance of speech enhancement, but a requirement of a user for high-quality speech can still be met.

In some embodiments, the service server may also obtain the raw audio data transmitted by the user terminal, and obtain, by loading a trained target mask estimation model, a target mask corresponding to a current audio frame associated with the raw audio data, to implement speech enhancement. The system architecture shown in FIG. 1 may include one or more service servers. One user terminal may be connected to one service server. Each service server may obtain raw audio data uploaded by a user terminal connected to the service server, and perform speech enhancement on the raw audio data.

It can be understood that the foregoing system architecture is suitable for a variety of service scenarios involving audio/video capture. The service scenarios may specifically include real-time noise reduction scenarios such as an audio/video conferencing scenario, an audio/video call scenario, an audio/video livestreaming scenario, an audio/video interview scenario, a remote visiting scenario, speech enhancement for a hearing-aid device, and speech recognition; or may be non-real-time noise reduction scenarios such as audio/video recording and audio/video post-production, or other service scenarios in which speech enhancement needs to be performed on captured audio data, especially a service scenario in which babble noise needs to be suppressed in real time. Specific service scenarios are not described in detail herein.

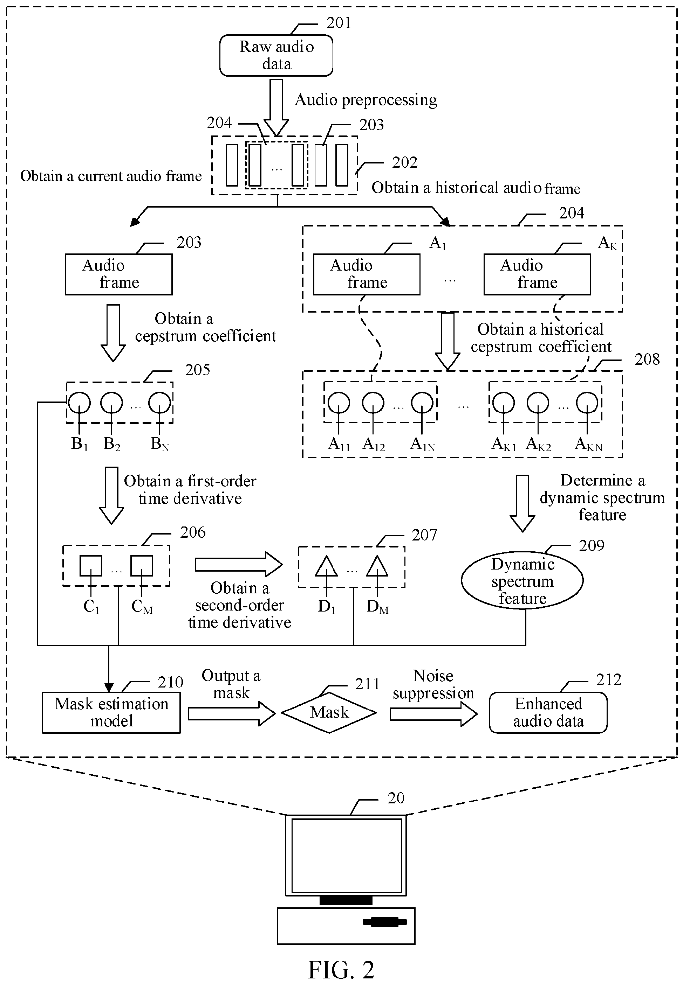

Further refer to FIG. 2. FIG. 2 is a schematic diagram of a scenario of audio data processing according to an embodiment of this application. A computer device 20 shown in FIG. 2 may be the service server 100 or any user terminal (for example, the user terminal 200a) in the user terminal cluster in the embodiment corresponding to FIG. 1. This is not limited herein.

As shown in FIG. 2, raw audio data 201 may be a mixed audio signal that includes speech data of a service object and noise data in an environment. The raw audio data 201 may be audio data captured in real time by a related audio device of the computer device 20, or may be audio data obtained by the computer device 20 from a to-be-processed multimedia file, or may be audio data transmitted by another computer device to the computer device 20 for audio processing. This is not limited in embodiments of this application.

It can be understood that the computer device 20 may suppress the noise data in the raw audio data 201 after obtaining the raw audio data 201 to obtain audio data with higher speech quality. To achieve this objective, the computer device 20 may first extract an audio feature of the raw audio data 201 by using a DSP technology. Before this, the computer device 20 may perform audio preprocessing on the raw audio data 201, specifically including: performing window-based frame preprocessing, time-frequency transform, or another operation on the raw audio data 201. In this way, an audio frame set 202 associated with the raw audio data 201 can be obtained. The audio frame set 202 may include a plurality of audio frames in frequency domain (namely, spectral frames). A quantity of audio frames included in the audio frame set 202 is not limited herein.

Then the computer device 20 may perform audio feature extraction, mask estimation, noise suppression, or another processing operation on each audio frame in the audio frame set 202. A sequence of processing audio frames is not limited in embodiments of this application. For example, a plurality of audio frames may be processed in parallel, or the audio frames may be processed in series according to a chronological order in which the audio frames are obtained. In embodiments of this application, any to-be-processed audio frame in the audio frame set 202 may be used as a current audio frame. For example, an audio frame 203 in the audio frame set 202 may be used as the current audio frame. When another audio frame is used as the current audio frame, a corresponding processing process is the same as that for the audio frame 203.

In addition, the computer device 20 may further obtain a historical audio frame set 204 associated with the audio frame 203 in the audio frame set 202. The historical audio frame set 204 may include K historical audio frames preceding the current audio frame. For example, the K historical audio frames may be an audio frames A₁, ..., and an audio frame A_{K} in sequence, K being a positive integer. A specific value of K is not limited herein. It can be understood that the audio frame A₁ to the audio frame A_{K} are spectral frames preceding the audio frame 203.

Further, the computer device 20 may perform audio feature extraction on the current audio frame. The audio frame 203 is used as an example. The computer device 20 may obtain a cepstrum coefficient set 205 corresponding to the audio frame 203. The cepstrum coefficient set 205 may be used for characterizing an acoustic feature of the audio frame 203. The cepstrum coefficient set 205 may include N cepstrum coefficients of the audio frame 203. For example, the N cepstrum coefficients may specifically include a cepstrum coefficient B₁, a cepstrum coefficient B₂, ..., and a cepstrum coefficient B_{N}, N being a positive integer greater than 1. A specific value of N is not limited herein.

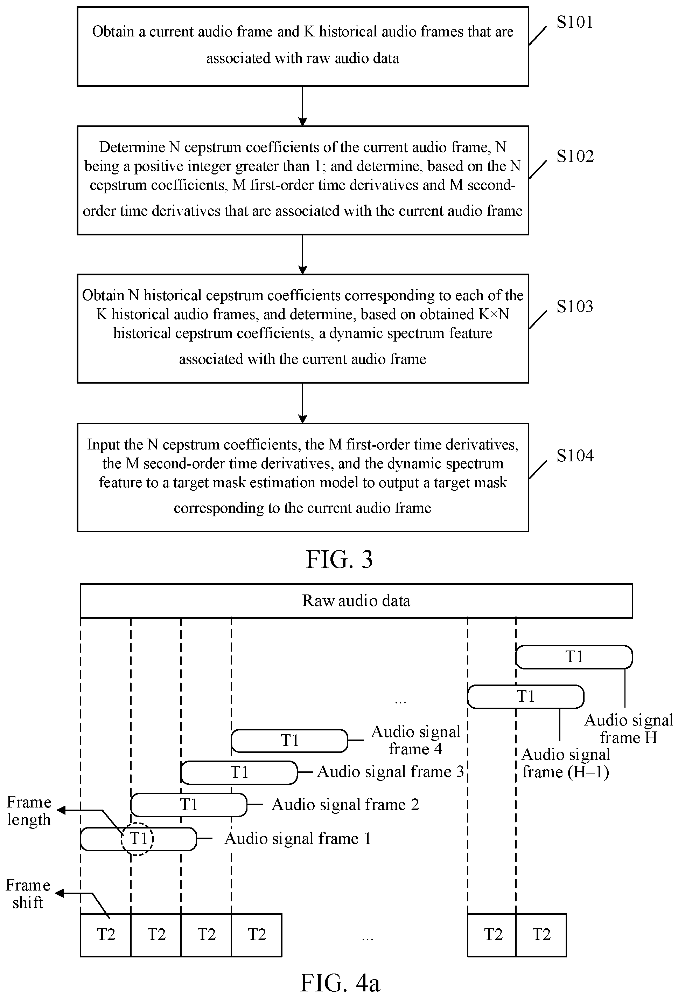

Then the computer device 20 may obtain, based on the N cepstrum coefficients in the cepstrum coefficient set 205, M first-order time derivatives and M second-order time derivatives that are associated with the audio frame 203, M being a positive integer less than N. A specific value of M is not limited herein. The first-order time derivatives may be obtained by performing a differential operation on the cepstrum coefficient B₁, the cepstrum coefficient B₂, ..., and the cepstrum coefficient B_{N}. The second-order time derivatives may be obtained by performing a secondary differential operation on the obtained first-order time derivatives. For a specific operation process, refer to related descriptions of step S 102 in a subsequent embodiment corresponding to FIG. 3.

As shown in FIG. 2, after a corresponding operation is performed, the computer device 20 may obtain a first-order time derivative set 206 and a second-order time derivative set 207. The first-order time derivative set 206 may include M first-order time derivatives associated with the audio frame 203. For example, the M first-order time derivatives may specifically include a first-order time derivative C₁, ..., and a first-order time derivative C_{M}. Similarly, the second-order time derivative set 207 may include M second-order time derivatives associated with the audio frame 203. For example, the M second-order time derivatives may specifically include a second-order time derivative D₁, ..., and a second-order time derivative D_{w}.

In addition, to more accurately characterize a stability feature of the raw audio data, the computer device 20 may further obtain a dynamic spectrum feature associated with the current audio frame. The audio frame 203 is still used as an example. After obtaining the historical audio frame set 204, the computer device 20 may obtain N historical cepstrum coefficients corresponding to each historical audio frame in the historical audio frame set 204, for example, may obtain N historical cepstrum coefficients corresponding to the audio frame A₁, including a cepstrum coefficient A₁₁, a cepstrum coefficient A₁₂, ..., and a cepstrum coefficient A_{1N}; ...; and obtain N historical cepstrum coefficients corresponding to the audio frame A_{K}, including a cepstrum coefficient A_{K1}, a cepstrum coefficient A_{K2}, ..., and a cepstrum coefficient A_{KN}. In embodiments of this application, obtained K×N historical cepstrum coefficients may be used as a cepstrum coefficient set 208. It can be understood that a process of obtaining N historical cepstrum coefficients corresponding to each historical audio frame is similar to the foregoing process of obtaining the N cepstrum coefficients corresponding to the audio frame 203. Details are not described herein again.

Further, the computer device 20 may determine, based on the K×N historical cepstrum coefficients in the cepstrum coefficient set 208, a dynamic spectrum feature 209 associated with the audio frame 203. For a specific process thereof, refer to related descriptions of step S103 in the subsequent embodiment corresponding to FIG. 3.

Further, after obtaining the audio feature of the audio frame 203, the computer device 20 may load a pre-trained target mask estimation model (for example, a mask estimation model 210), and then may input the cepstrum coefficient set 205, the first-order time derivative set 206, the second-order time derivative set 207, and the dynamic spectrum feature 209 to the mask estimation model 210. The mask estimation model 210 may perform mask estimation on the input audio feature to obtain a target mask (for example, a mask 211) corresponding to the audio frame 203.

Then the computer device 20 may apply the obtained mask 211 to the audio frame 203 to suppress noise data in the audio frame 203. It can be understood that a function of the mask is equivalent to retaining, to a maximum extent, the speech data of the service object in the raw audio data while eliminating the noise data that causes interference (for example, talking of other people near the service object). In addition, processes of processing other audio frames (for example, the audio frame A₁, ..., and the audio frame A_{K}) by the computer device 20 are similar to the processing process for the audio frame 203. Details are not described herein again.

Finally, after performing noise suppression on each audio frame in the audio frame set 202, the computer device 20 may obtain enhanced audio data 212 corresponding to the raw audio data 201. In this case, the enhanced audio data 212 includes a very small amount of noise data, and the speech data of the service object is effectively retained. High speech fidelity is achieved.

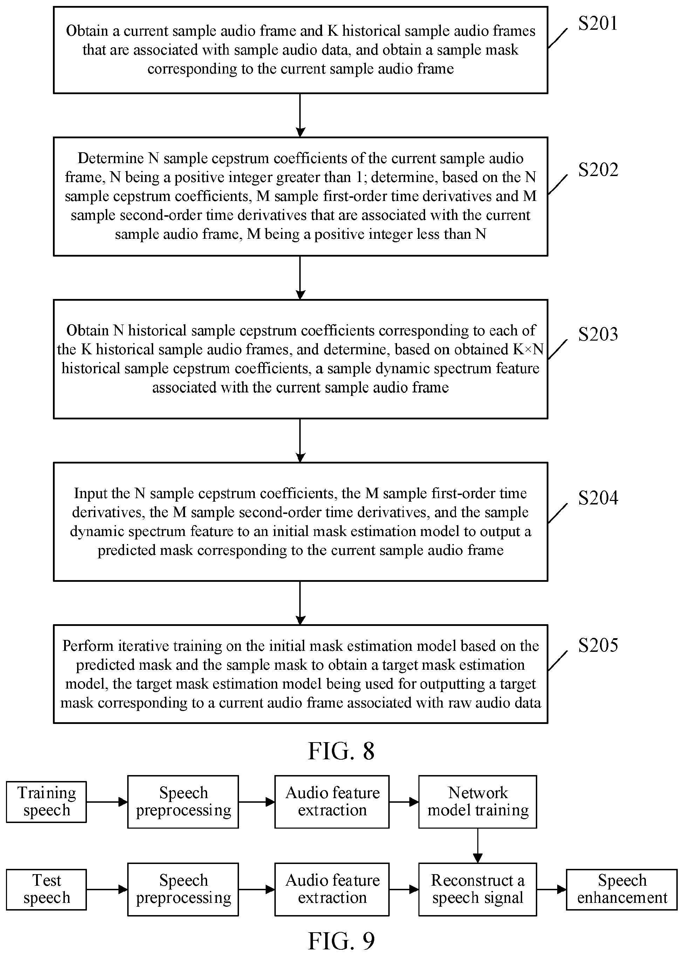

It can be understood that the computer device 20 may train a neural network by using an audio database including massive audio data to obtain the mask estimation model 210. For a specific training process, refer to a subsequent embodiment corresponding to FIG. 8.

It can be understood that a source of the raw audio data may vary in different service scenarios. Correspondingly, a function of enhanced audio data that is finally obtained may also vary. For example, in real-time audio/video communication scenarios such as audio/video conferencing, audio/video calls, audio/video livestreaming, audio/video interviews, or remote visiting, the computer device 20 may transmit enhanced audio data F1 obtained through real-time speech enhancement on raw audio data E1 to a user terminal of another user who performs audio/video communication with a service object 1. For another example, in a speech enhancement scenario for a hearing-aid device, the computer device 20 may perform speech enhancement on raw audio data E2 that is associated with a service object 2 and that is obtained by the hearing-aid device, so that enhanced audio data F2 including clear speech data of the service object 2 can be returned to the hearing-aid device for play. For another example, in a speech recognition scenario, after obtaining raw audio data E3 input by a service object 3, the computer device 20 may first perform speech enhancement on the raw audio data E3 to obtain enhanced audio data F3, and then may perform speech recognition on high-quality speech data included in the enhanced audio data F3, so that accuracy of speech recognition can be improved. For another example, in an audio/video recording scenario, the computer device 20 may perform speech enhancement on raw audio data E4 that is input by a service object 4, and may store or transmit obtained enhanced audio data F4 (for example, the enhanced audio data may be stored in a local cache of the computer device 20 or uploaded to a cloud storage) (for example, the enhanced audio data may be transmitted, as an audio/video session message during instant messaging, to another user terminal for play). For another example, in an audio/video production scenario, the computer device 20 may obtain raw audio data E5 from a to-be-processed multimedia file and perform speech enhancement on the raw audio data, and then may replace the raw audio data E5 in the to-be-processed multimedia file with enhanced audio data F5, to improve audio quality of the multimedia file.

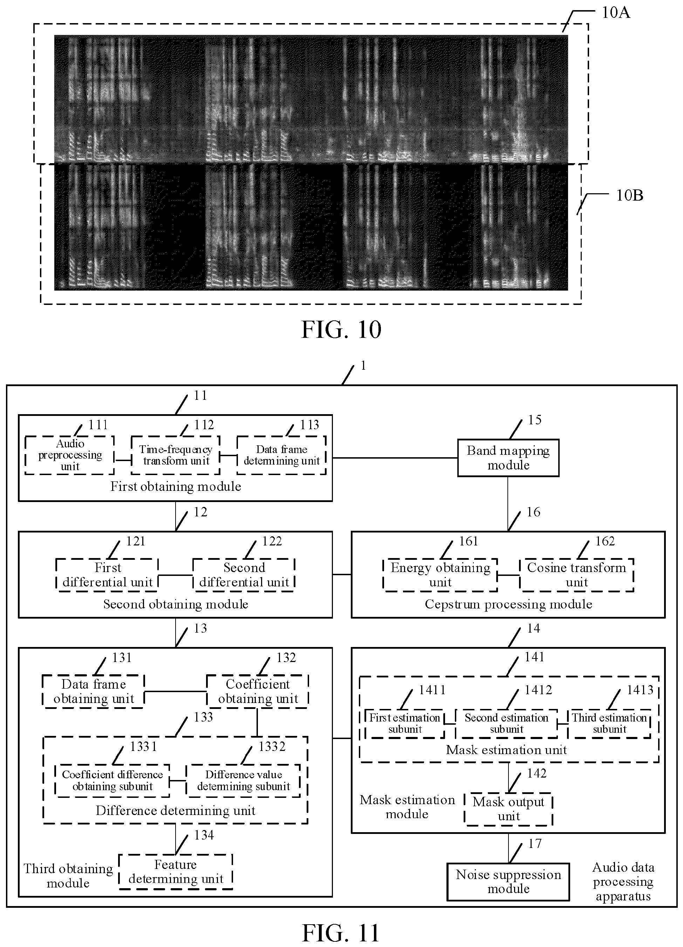

In some embodiments, obtaining, by the computer device 20, a target mask estimation model by training an initial mask estimation model, obtaining a target audio feature of a current audio frame associated with raw audio data, performing mask estimation on the target audio feature through the target mask estimation model, outputting a target mask corresponding to the current audio frame, and performing noise suppression by using the target mask, refer to descriptions in the following embodiments corresponding to FIG. 3 and FIG. 10.

FIG. 3 is a schematic flowchart of an audio data processing method according to an embodiment of this application. It can be understood that the method provided in embodiments of this application may be performed by a computer device. The computer device herein includes but is not limited to a user terminal or a service server on which a target mask estimation model is run. In embodiments of this application, an example in which the computer device is a user terminal is used to describe a specific process of performing audio processing (for example, speech enhancement) on raw audio data on the user terminal. As shown in FIG. 3, the method may include at least the following step S101 to step S104.

Step S101: Obtain a current audio frame and K historical audio frames that are associated with raw audio data.

Specifically, the user terminal may obtain raw audio data that includes speech data of a service object and noise data in an environment. The raw audio data may be audio data captured by the user terminal through an audio device in real time, or may be audio data obtained from a to-be-processed multimedia file, or may be audio data transmitted by another associated user terminal. This is not limited herein.

It can be understood that, from the perspective of statistics, speech data has specific stationarity. For example, speech data may show obvious stationarity and regularity in a pronunciation unit that lasts tens of milliseconds to hundreds of milliseconds. Based on this, during speech enhancement on a piece of audio data, speech enhancement may be performed based on a small pronunciation unit (for example, a phoneme, a word, or a byte). Therefore, before performing audio feature extraction on the raw audio data, the user terminal may perform audio preprocessing on the raw audio data to obtain a plurality of spectral frames in frequency domain.

In an implementation, the user terminal may divide the raw audio data into H audio data segments by using a window function. A short-time segment may be extracted from the raw audio data by using a sliding window. Specifically, the user terminal may perform window-based frame preprocessing on the raw audio data to obtain H audio data segments, H being a positive integer greater than 1. A specific quantity of audio data segments is not limited in embodiments of this application.

The window-based frame preprocessing may include a frame dividing operation and a windowing operation. First, the user terminal may perform the frame dividing operation on the raw audio data to obtain H audio signal frames in time domain. Starting and ending of each audio signal frame obtained through framing are interrupted. Consequently, an error with respect to the raw audio data increases with an increase of a quantity of audio signal frames obtained through segmentation. Therefore, in embodiments of this application, the windowing operation may be used to resolve this problem, so that a framed signal becomes continuous, and each frame of signal can show characteristics of a periodic function. To be specific, the user terminal may perform the windowing operation on each of the obtained H audio signal frames to obtain H continuous audio data segments of the signal. In embodiments of this application, during the windowing operation, each audio signal frame is sequentially multiplied with a window function to obtain a corresponding audio data segment. The window function includes but is not limited to a Vorbis window, a Hamming window, a rectangular window, a Hanning window, and the like. In some embodiments, an appropriate window function may be selected according to a requirement. This is not limited in embodiments of this application.

The user terminal may determine, jointly based on a length of the raw audio data and a frame length and a frame shift used in the frame dividing operation, a quantity of audio signal frames. The frame length is a length of one audio signal frame. The "length" herein may be expressed in a plurality of manners, for example, may be expressed by using time or a quantity of sampling points. In some embodiments, when the length is expressed by using time, the length of one audio signal frame may usually range from 15 ms to 30 ms. In some embodiments, an appropriate frame length may be selected according to a requirement. This is not limited in embodiments of this application. For example, in some embodiments, the frame length may be set to 20 ms. An audio signal with a frame length of 20 ms is an audio signal with a duration of 20 ms.

In some embodiments, the length may alternatively be expressed by using a quantity of sampling points. For example, in some embodiments, assuming that a sampling rate of the raw audio data is 16 kHz and the frame length is 20 ms, one audio signal frame may include 320 sampling points: 16 kHz × 20 ms.

The frame shift is a moving distance during frame dividing. Starting from a starting point of the first audio signal frame, movement is performed by one frame shift, until a starting point of a next audio signal frame is reached. The frame shift herein may also be expressed in two manners. For example, in some embodiments, the frame shift may be expressed by using time, and the frame shift is set to 12 ms. For another example, in some embodiments, the frame shift may be expressed by using a quantity of sampling points. For raw audio data with a sampling rate of 16 kHz, the frame shift may be set to 192 sampling points.

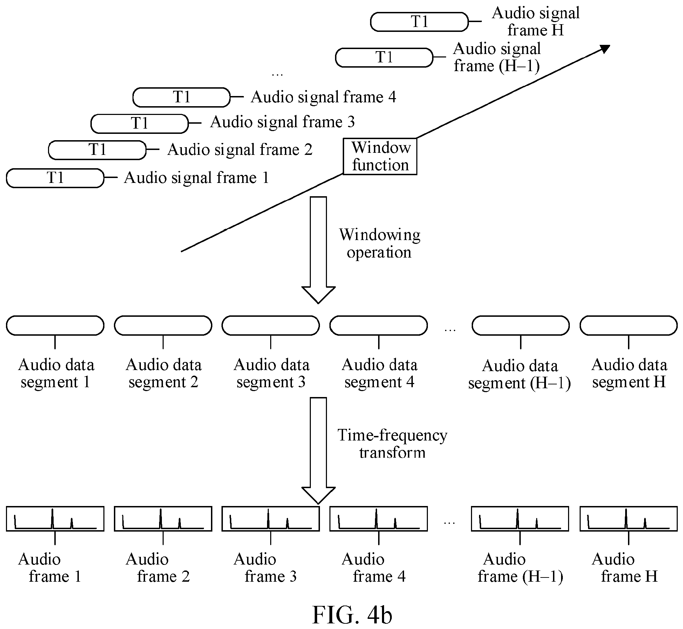

Refer to FIG. 4a and FIG. 4b. FIG. 4a and FIG. 4b are schematic diagrams of a scenario of audio preprocessing according to an embodiment of this application. As shown in FIG. 4a, during a frame dividing operation on raw audio data with a length of T, a frame length may be set to T1 (for example, set to 20 ms), and a frame shift is set to T2 (for example, set to 12 ms), In this case, starting from a starting position of the raw audio data, an audio signal with a frame length of T1 is extracted to obtain the first audio signal frame, namely, an audio signal frame 1. Then movement is performed by one frame shift with a length of T2, and an audio signal with a frame length of T1 is extracted from a position obtained after the movement to obtain the second audio signal frame, namely, an audio signal frame 2. By analogy, H audio signal frames may be finally obtained, where H=(T-T1)/T2+1.

Particularly, during the frame dividing operation, a length of the last remaining signal may be less than one frame. In this case, 0s may be added to the remaining signal to make it reach a length of one frame (namely, T1), or the remaining signal may be directly discarded, because the last frame is at the end of the raw audio data and mainly includes silence clips.

Further, as shown in FIG. 4b, after obtaining the H audio signal frames through the frame dividing operation, the user terminal may apply the window function to each audio signal frame sequentially to obtain a corresponding audio data segment. For example, the audio signal frame 1 may be multiplied by the window function to obtain an audio data segment 1; the audio signal frame 2 may be multiplied by the window function to obtain an audio data segment 2; ...; and an audio signal frame H may be multiplied by the window function to obtain an audio data segment H. It can be understood that the audio data segment 1 to the audio data segment H herein are arranged in chronological order.

In some embodiments, an analysis window is a window function used during the window-based frame preprocessing. To achieve perfect reconstruction of a speech signal and reduce a degree of distortion of the speech signal, a synthesis window may be added in a subsequent process of restoring a speech spectrum in frequency domain to a speech signal in time domain. Both the analysis window and the synthesis window may be Vorbis windows. This window function meets the Princen-Bradley criterion. A specific implementation process is not described in embodiments of this application. For a definition of the Vorbis window, see the following formula (1): $w \left(n\right) = sin \left(\frac{π}{2}{sin}^{2}\left(\frac{πn}{N}\right)\right)$

n is an index of a sampling point to which the Vorbis window is currently applied, N is a window length, and 0≤n≤ N-1.

After obtaining the H audio data segments, for each of the H audio data segments, the user terminal may further perform time-frequency transform on the respective audio data segment to obtain an audio frame; and determine, from obtained H audio frames, the current audio frame and K historical audio frames preceding the current audio frame, K being less than H. To be specific, an audio data segment in time domain may be transformed into an audio frame in frequency domain to obtain a spectral frame on which noise suppression can be performed more easily.

In embodiments of this application, any one of the H audio data segments is used as an example to describe a specific process of time-frequency transform. Assuming that the H audio data segments include an audio data segment i, i being a positive integer less than or equal to H, the user terminal may first perform time-frequency transform, for example, Fourier transform such as fast Flourier transform (FFT), on the audio data segment i to obtain a direct-current component frequency bin and 2S frequency bins of the audio data segment i in frequency domain. To be specific, a total of (1+2S) frequency bins may be obtained after the Fourier transform, S being a positive integer. A quantity of frequency bins is not limited in embodiments of this application. A quantity of sampling points of an audio signal frame corresponding to each audio data segment may be the same as or different from a quantity of frequency bins corresponding to the audio data segment. In some embodiments, a quantity of frequency bins obtained after the Fourier transform may be set according to a requirement. For example, in some embodiments, a quantity of sampling points corresponding to each audio signal frame is 320. In this case, during time-frequency transform, a quantity of frequency bins corresponding to each audio data segment may be set to 512.

It can be learned from properties of the Fourier transform that the (1+2S) frequency bins obtained after the Fourier transform are complex numbers. Each complex number corresponds to a frequency. A modulus value of the complex number may represent an amplitude feature of the frequency. The amplitude feature and an amplitude of a corresponding audio signal have a specific proportional relationship. 2S complex numbers other than the first complex number (namely, the direct-current component frequency bin) are conjugate-symmetric with respect to their centers. Modulus values (or amplitudes) of two conjugate-symmetric complex numbers are the same. Therefore, only spectra of half of the 2S frequency bins need to be selected. In embodiments of this application, the first S frequency bins of the 2S frequency bins may be identified as frequencies related to a first frequency-bin type. Correspondingly, the second S frequency bins of the 2S frequency bins may be identified as frequencies related to a second frequency-bin type. To be specific, the 2S frequency bins may include S frequency bins related to the first frequency-bin type and S frequency bins related to the second frequency-bin type. It can be understood that the S frequency bins related to the first frequency-bin type and the S frequency bins related to the second frequency-bin type are conjugate-symmetric with respect to their centers.

Then the user terminal may obtain the first S frequency bins related to the first frequency-bin type from the 2S frequency bins, and may determine, based on first the S frequency bins related to the first frequency-bin type and the direct-current component frequency bin, an audio frame corresponding to the audio data segment i. Alternatively, in some embodiments, due to characteristics of conjugate symmetry, the user terminal may determine, based on the S frequency bins related to the second frequency-bin type and the direct-current component frequency bin, an audio frame corresponding to the audio data segment i. This is not limited in embodiments of this application.

It can be understood that the audio frame corresponding to the audio data segment i is a spectral frame in frequency domain. For example, in some embodiments, after the time-frequency transform, 513 frequencies are correspondingly obtained for each audio data segment, including one direct-current component frequency bin and 512 frequencies having a conjugate-symmetric relationship. In this case, the first half of the 512 frequencies (namely, frequencies related to the first frequency-bin type) and the direct-current component frequency bin may be used to constitute a corresponding audio frame.

For example, it is assumed that five frequencies (that is, S=2) are obtained after Fourier transform is performed on the audio data segment i, including one direct-current component frequency bin (a+bi), and a frequency bin (c+di), a frequency bin (e+fi), a frequency bin (c-di), and a frequency bin (e-fi). The frequency bin (c+di) and the frequency bin (c-di) are a pair of conjugate complex numbers. The frequency bin (e+fi) and the frequency bin (e-Fi) are also a pair of conjugate complex numbers. Therefore, the frequency bin (c+di) and the frequency bin (e+fi) may be considered as frequencies related to the first frequency-bin type, and the frequency bin (c-di) and the frequency bin (e-fi) may be considered as frequencies related to the second frequency-bin type. Further, the audio frame corresponding to the audio data segment i may be determined based on the direct-current component frequency bin (a+bi), the frequency bin (c+di), and the frequency bin (e+fi); or the audio frame corresponding to the audio data segment i may be determined based on the direct-current component frequency bin (a+bi), the frequency bin (c-di), and the frequency bin (e-fi).

Refer to FIG. 4b. As shown in FIG. 4b, time-frequency transform may be performed on the audio data segment 1 to obtain an audio frame 1; time-frequency transform may be performed on the audio data segment 2 to obtain an audio frame 2; ...; and time-frequency transform may be performed on the audio data segment H to obtain an audio frame H It can be understood that a sequence of the H audio frames in frequency domain is consistent with that of the H audio data segments in time domain.

It can be understood that, after obtaining the H audio frames, the user terminal may determine a current audio frame and K historical audio frames preceding the current audio frame in time domain. As shown in Fig. 4a, a frame length of each historical audio frame is equal to be T1. And a starting time of the kth historical audio frame is determined by (k-1)*T2, k=1,...K. The interval between the starting time of any historical audio frame and the starting time of the current audio frame is multiples of T2. The current audio frame and the K historical audio frames are spectral frames. The current audio frame may be any to-be-processed audio frame of the H audio frames, and each of the K historical audio frames is a spectral frame preceding the current audio frame, K being a positive integer less than H. A value of K is not limited in embodiments of this application. Still as shown in FIG. 4b, assuming that an audio frame 4 is used as the current audio frame, spectral frames preceding the audio frame 4 are the audio frame 1, the audio frame 2, and an audio frame 3. For example, in the case of K=2, the audio frame 2 and the audio frame 3 that are closest to the audio frame 4 may be used as required historical audio frames.

During processing on each audio frame, K historical audio frames preceding the audio frame need to be obtained. Particularly, when a quantity of historical audio frames preceding a current audio frame does not meet the specified quantity of K, 0s may be added to make the quantity of historical audio frames preceding the audio frame reach K. For example, with reference to FIG. 4b, assuming that the audio frame 1 is used as the current audio frame and K=2, it can be learned that no spectral frame precedes the audio frame 1 after the time-frequency transform. Therefore, two all-0 spectral frames may be added in front of the audio frame 1 as historical audio frames preceding the audio frame 1

Step S102: Determine N cepstrum coefficients of the current audio frame, N being a positive integer greater than 1; and determine, based on the N cepstrum coefficients, M first-order time derivatives and M second-order time derivatives that are associated with the current audio frame.

It can be understood that, the user terminal perform audio features extraction on the current audio frame after obtaining the current audio frame through audio preprocessing. Specifically, N cepstrum coefficients that can characterize an acoustic feature of the current audio frame may be obtained. In addition, M first-order time derivatives, M second-order time derivatives, and a dynamic spectrum feature that can characterize a feature of temporal correlation between different speech signals may be further obtained. N is a positive integer greater than 1, and M is a positive integer less than N. A process of determining the cepstrum coefficients, the first-order time derivatives, and the second-order time derivatives that are associated with the current audio frame is described below in detail.

A specific process of obtaining the N cepstrum coefficients of the current audio frame includes: It is assumed that the current audio frame includes a total of S1 frequency bins, the S1 frequency bins include a direct-current component frequency bin and S2 frequency bins related to a frequency-bin type, S1 and S2 are positive integers, and S1=1+S2. With reference to the descriptions of the time-frequency transform process in step S101, the S2 frequency bins related to a frequency-bin type may be S frequency bins related to the first frequency-bin type or S frequency bins related to the second frequency-bin type, where S2=S. Based on this, the user terminal may map the S1 (for example, 256+1) frequency bins to N (for example, 56) acoustic bands, S1 being greater than or equal to N. To be specific, frequencies of the S1 frequency bins may be divided according to a coarser frequency scale (namely, the acoustic band in embodiments of this application), to reduce complexity of subsequent calculation.

Further, for each of the N acoustic bands, cepstrum processing may be performed on the respective acoustic band to obtain a target cepstrum coefficient. It is assumed herein that N acoustic bands include an acoustic band j, j being a positive integer less than or equal to N. A specific process of performing cepstrum processing on the acoustic band j may be as follows:

First, original band energy of the acoustic band j may be determined.

In some embodiments, triangular filtering may be performed on frequency bin data to obtain original band energy corresponding to the frequency bin data in each acoustic band. For example, a triangular filter (for example, a triangular filter j) associated with the acoustic band j may be obtained from a triangular filter bank including N triangular filters, and then each filter point in the triangular filter j may be applied to a frequency bin at a corresponding position in the acoustic band j to obtain original band energy of the acoustic band j.

In some embodiments, when a quantity of acoustic bands is 56, 56 triangular filters are also needed correspondingly.

Further, logarithmic transform may be performed on the original band energy of the acoustic band j to obtain logarithmic band energy of the acoustic band j. Then discrete cosine transform (DCT) may be performed on the logarithmic band energy of the acoustic band j to obtain a target cepstrum coefficient corresponding to the acoustic band j.

It can be understood that the N cepstrum coefficients of the current audio frame may be obtained after cepstrum processing is performed on each acoustic band. A process of obtaining cepstrum coefficients of another audio frame is consistent with that of obtaining the cepstrum coefficients. Details are not described herein again.

In the related art, a size of a frequency bin (which may be understood as a spacing between samples in frequency domain) is directly estimated by using a neural network. This leads to very high calculation complexity. To resolve this problem, no sample or spectrum is directly processed in this application. Assuming that spectral envelopes of speech and noise are sufficiently flat, a resolution coarser than the frequency bin may be used. To be specific, frequencies of each frequency bin are divided into coarser frequency scales to reduce calculation complexity. These coarser frequency scales may be referred to as acoustic bands in embodiments of this application. Different acoustic bands may be used for characterizing nonlinear features of human ears' perception of sound.

The acoustic band in embodiments of this application may be a Bark frequency scale, a Mel frequency scale, or another frequency scale. This is not limited herein. For example, the Bark frequency scale is used as an example. The Bark frequency scale is a frequency scale that matches human ears' perception of sound. The Bark frequency scale is based on Hz. It maps frequencies to 24 critical bands of psychoacoustics. The 25^{th} critical band occupies frequencies of approximately 16 kHz to 20 kHz. Width of one critical band is equal to one Bark. In short, the Bark frequency scale converts a physical frequency into a psychoacoustic frequency.

With reference to the foregoing steps, when frequency bins are directly used, spectrum values (complex numbers) of S1 (for example, 257) frequency bins need to be considered. In this case, a large amount of data is subsequently input to the target mask estimation model. Therefore, in embodiments of this application, the S1 frequency bins are re-divided into N acoustic bands (bands) based on characteristics of band envelopes, to reduce an amount of calculation.

For example, in some embodiments, a Bark domain may be approximately expressed by using various approximation functions. It is assumed that a sampling rate is 16 kHz, a window length is 512, a frame length is 20 ms, a frame shift is 12 ms, and an audio frame obtained after Fourier transform includes 257 frequency bins. In this case, the 257 frequency bins may be divided into 56 acoustic bands based on a specified band approximation function. Division is performed based on the following code:

```
            static const opus_int16 eband5ms[] = {//eband20ms --- 56 ok
               0, 1, 2, 3, 4, 5, 6, 7, 8, 9, 10, 11,
12, 13, 14, 15, 16, 17, 18, 19, 20, 21, 22, 23, 24,
               25, 26, 27, 28, 29, 30, 31, 32, 34, 36,
38, 40, 42, 44, 46, 48, 56, 64, 72, 80, 92, 104, 116, 128, 144,
               160, 176, 192, 208, 232, 256
            1.
```

To be specific, a frequency bin 0 (namely, the first frequency bin, which is a direct-current component frequency bin) may be divided into the first acoustic band, a frequency bin 1 (namely, the second frequency bin) may be divided into the second acoustic band, ...., a frequency bin 232 to a frequency bin 255 are divided into the 55^{th} acoustic band, and a frequency bin 256 is divided into the 56^{th} acoustic band. Then cepstrum processing may be separately performed on the 56 acoustic bands (to be specific, performing logarithmic transform and then DCT on original band energy of each acoustic band). Finally, 56 Bark frequency cepstrum coefficients (BFCCs) are obtained.

In addition to the N cepstrum coefficients, first-order time derivatives and second-order time derivatives of the N cepstrum coefficients are further considered. A specific process of obtaining, by the user terminal based on the N cepstrum coefficients, the M first-order time derivatives and the M second-order time derivatives that are associated with the current audio frame may be as follows:

First, a first differential operation is performed on the N cepstrum coefficients to obtain (N-1) differential operation values. Then each of the (N-1) differential operation values may be used as a first-order time derivative, and the M first-order time derivatives associated with the current audio frame may be obtained from the (N-1) first-order time derivatives. Similarly, a secondary differential operation may be performed on the (N-1) first-order time derivatives to obtain (N-2) differential operation values. Then each of the (N-2) differential operation values may be used as a second-order time derivative, and the M second-order time derivatives associated with current audio frame may be obtained from the (N-2) second-order time derivatives. A value of M is not limited in embodiments of this application. For example, in some embodiments, M may be set to 6.

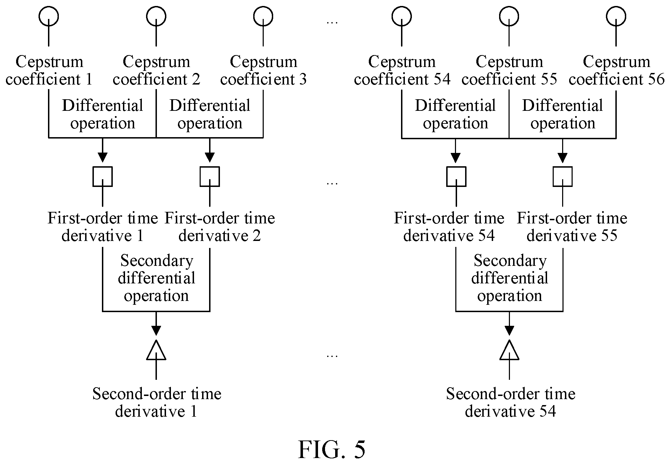

Refer to FIG. 5. FIG. 5 is a schematic diagram of a scenario of a differential operation on cepstrum coefficients according to an embodiment of this application. As shown in FIG. 5, it is assumed that an audio frame corresponds to 56 cepstrum coefficients (for example, BFCCs): a cepstrum coefficient 1, a cepstrum coefficient 2, a cepstrum coefficient 3, ..., a cepstrum coefficient 54, a cepstrum coefficient 55, and a cepstrum coefficient 56. A differential operation may be performed on the cepstrum coefficient 1 and the cepstrum coefficient 2 (for example, the cepstrum coefficient 2 - the cepstrum coefficient 1) to obtain a first-order time derivative 1; a differential operation may be performed on the cepstrum coefficient 2 and the cepstrum coefficient 3 to obtain a first-order time derivative 2; ...; a differential operation may be performed on the cepstrum coefficient 54 and the cepstrum coefficient 55 to obtain a first-order time derivative 54; and a differential operation may be performed on the cepstrum coefficient 55 and the cepstrum coefficient 56 to obtain a first-order time derivative 55.

Then a secondary differential operation may be performed on the obtained first-order time derivative 1 to first-order time derivative 55. For example, a secondary differential operation may be performed on the first-order time derivative 1 and the first-order time derivative 2 (for example, the first-order time derivative 2 - the first-order time derivative 1) to obtain a second-order time derivative 1; ...; and a secondary differential operation may be performed on the first-order time derivative 54 and the first-order time derivative 55 to obtain a second-order time derivative 54.

In some embodiments, M may be set to 6, and the first 6 first-order time derivatives and the first 6 second-order time derivatives are used. To be specific, a first-order time derivative 1 to a first-order time derivative 6, and a second-order time derivative 1 to a second-order time derivative 6 are used.

Step S103: Obtain N historical cepstrum coefficients corresponding to each of the K historical audio frames, and determine, based on obtained K×N historical cepstrum coefficients, a dynamic spectrum feature associated with the current audio frame.

In addition to the cepstrum coefficients, the first-order time derivatives, and the second-order time derivatives mentioned in step S102, a stationarity measure of a previous audio frame on a current audio frame, namely, a dynamic spectrum feature, may be further considered. The feature may be obtained based on band difference values corresponding to K historical audio frames in the past.

In some embodiments, N historical cepstrum coefficients corresponding to each historical audio frame may be obtained during processing on the historical audio frame (to be specific, when the audio frame is used as a current audio frame, for a specific process, refer to the process of obtaining the N cepstrum coefficients in step S102). Therefore, the user terminal may store, by using its cache (for example, a ring buffer structure), N historical cepstrum coefficients corresponding to the latest K historical audio frames preceding a current audio frame. When each current audio frame is updated to a next audio frame, historical cepstrum coefficients in the cache are correspondingly updated.

Specifically, any two adjacent historical audio frames may be obtained from the K historical audio frames preceding the current audio frame as a first historical audio frame and a second historical audio frame, the second historical audio frame being a spectral frame obtained after the first historical audio frame. Then first N historical cepstrum coefficients corresponding to the first historical audio frame and second N historical cepstrum coefficients corresponding to the second historical audio frame may be obtained from a cache related to the current audio frame (for example, a local cache of the user terminal).

The determining, based on obtained K×N historical cepstrum coefficients, a dynamic spectrum feature associated with the current audio frame specifically includes: for any two adjacent historical audio frames from the K historical audio frames, using N difference values respectively between the first N historical cepstrum coefficients and the second N historical cepstrum coefficients as an interframe difference value between the first historical audio frame and the second historical audio frame; and determining the dynamic spectrum feature based on K-1 interframe difference values between adjacent historical audio frames in the K historical audio frames.

In embodiments of this application, the obtained N historical cepstrum coefficients corresponding to the first historical audio frame may be used as first historical cepstrum coefficients, and the obtained N historical cepstrum coefficients corresponding to the second historical audio frame may be used as second historical cepstrum coefficients.

Further, band difference values between the first historical cepstrum coefficients and the second historical cepstrum coefficients may be used as interframe difference values between the first historical audio frame and the second historical audio frame. A specific process may be as follows: A historical cepstrum coefficient Lₚ is obtained from the N historical cepstrum coefficients included in the first historical cepstrum coefficients, and a historical cepstrum coefficient L_{q} may be obtained from the N historical cepstrum coefficients included in the second historical cepstrum coefficients, p and q being positive integers, p=1, ..., N, q=1, ..., N, and p=q. Further, a coefficient difference value between the historical cepstrum coefficient Lₚ and the historical cepstrum coefficient L_{q} (for example, the historical cepstrum coefficient Lₚ - the historical cepstrum coefficient L_{q}) may be obtained. Then N coefficient difference values may be determined as the band difference values between the first historical cepstrum coefficients and the second historical cepstrum coefficients. That is, the band difference values include the N coefficient difference values. Then the band difference values may be used as interframe difference values between the first historical audio frame and the second historical audio frame.

In some embodiments, a difference value sum of N coefficient difference values included in all interframe difference values may be obtained, and then the difference value sum may be averaged (for example, the difference value sum/K) to obtain a corresponding dynamic spectrum feature.

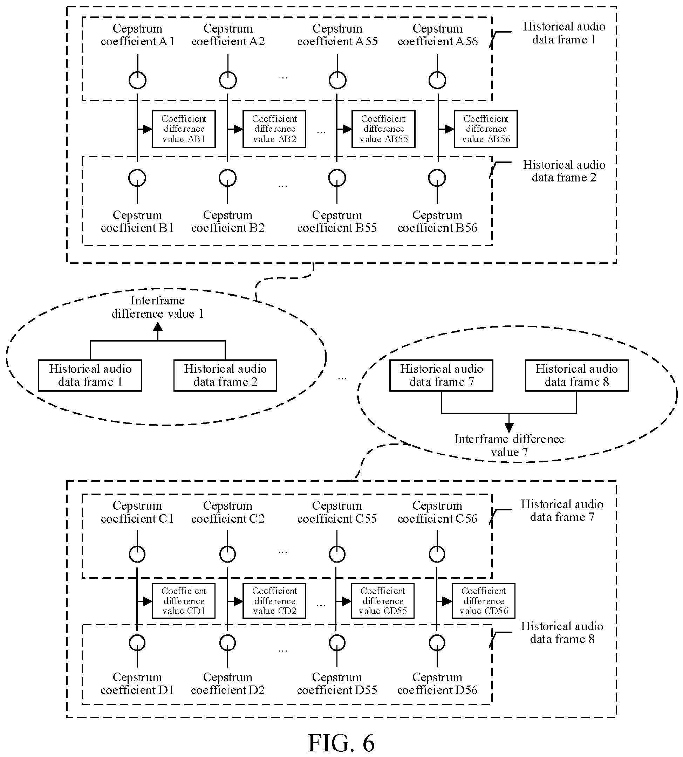

FIG. 6 is a schematic diagram of a scenario of obtaining an interframe difference value according to an embodiment of this application. As shown in FIG. 6, it is assumed that eight historical audio frames (that is, K=8) currently exist, which are sequentially a historical audio frame 1, a historical audio frame 2, ..., a historical audio frame 7, and a historical audio frame 8. Each historical audio frame corresponds to 56 historical cepstrum coefficients (that is, N=56). For example, the historical audio frame 1 corresponds to a cepstrum coefficient A1 to a cepstrum coefficient A56, the historical audio frame 2 corresponds to a cepstrum coefficients B1 to a cepstrum coefficients B56, ..., the historical audio frame 7 corresponds to a cepstrum coefficient C1 to a cepstrum coefficient C56, and the historical audio frame 8 corresponds to a cepstrum coefficient D1 to a cepstrum coefficient D56.

When the historical audio frame 1 is the first historical audio frame and the historical audio frame 2 is the second historical audio frame, the first historical cepstrum coefficients include the cepstrum coefficient A1 to the cepstrum coefficient A56, and the second historical cepstrum coefficients include the cepstrum coefficient B1 to the cepstrum coefficient B56. In this case, a coefficient difference value AB1 between the cepstrum coefficient A1 and the cepstrum coefficient B1 (for example, the cepstrum coefficient A1 - the cepstrum coefficient B1) may be obtained, a coefficient difference value AB2 between the cepstrum coefficient A2 and the cepstrum coefficient B2 may be obtained, ..., a coefficient difference value AB55 between the cepstrum coefficient A55 and the cepstrum coefficient B55 may be obtained, and a coefficient difference value AB56 between the cepstrum coefficient A56 and the cepstrum coefficient B56 may be obtained. Then 56 coefficient difference values (namely, the coefficient difference value AB1 to the coefficient difference value AB56) may be used as an interframe difference value 1 between the historical audio frame 1 and the historical audio frame 2.

By analogy, when the historical audio frame 7 is the first historical audio frame and the historical audio frame 8 is the second historical audio frame, likewise, 56 coefficient difference values (namely, a coefficient difference value CD1 to a coefficient difference value CD56) may be obtained as an interframe difference value 7 between the historical audio frame 7 and the historical audio frame 8.

Then a dynamic spectrum feature associated with a current audio frame may be determined based on interframe difference values (namely, the interframe difference value 1 to the interframe difference value 7) between the eight historical audio frames. For example, all 56 coefficient difference values included in each interframe difference value may be added to obtain a corresponding difference value sum, and then the eight difference value sums may be averaged to obtain a corresponding dynamic spectrum feature. To be specific, the dynamic spectrum feature=(the coefficient difference value AB1+... +the coefficient difference value AB56+...+the coefficient difference value CD1+...+the coefficient difference value CD56)/8.

When a quantity of historical audio frames preceding a current audio frame does not meet the specified quantity of K (for example, eight), 0s may be added to obtain K historical audio frames in embodiments of this application. A historical audio frame obtained by adding 0s is an all-0 spectral frame. Correspondingly, N cepstrum coefficients corresponding to the all-0 spectral frame may also be set to 0.

Step S104: Input the N cepstrum coefficients, the M first-order time derivatives, the M second-order time derivatives, and the dynamic spectrum feature to a target mask estimation model to output a target mask corresponding to the current audio frame.

It can be understood that, in an ML/DL-based intelligent speech enhancement technology inspired by the concept of time frequency (T-F) masking in computational auditory scene analysis (CASA), selection of a training object is quite important for both learning and generalization in supervised speech enhancement.

The training object is defined in a T-F representation of a speech signal, for example, is a spectrum graph calculated based on short-time Fourier transform. Training objects are mainly classified into two categories: masking-based objects, for example, an ideal ratio mask (IRM) that describes a time-frequency relationship between pure speech and babble noise; and mapping-based objects, for example, a logarithmic power spectrum that corresponds to a spectral representation of clean speech.

In embodiments of this application, the former manner is used: A mask is estimated from an input feature based on a nonlinear fitting capability of a neural network. Then the mask is multiplied by a spectrum of a noisy speech signal (namely, the raw audio data in embodiments of this application), and then a time domain waveform is reconstructed for the purpose of enhancement.

The user terminal may use a total of (N+2M+1) features, including the N cepstrum coefficients, the M first-order time derivatives, the M second-order time derivatives, and the dynamic spectrum feature that are obtained in the foregoing steps, as a target audio feature of the current audio frame, and may input the target audio feature to the target mask estimation model for mask estimation. For example, in some embodiments, a quantity of cepstrum coefficients is 56, and a quantity of first-order time derivatives and a quantity of second-order time derivatives each are 6. In this case, a size of the target audio feature input to target mask estimation model is as follows: 56+6×2+1=69.

The neural network-based target mask estimation model has a very strong nonlinear fitting capability. Therefore, an initial mask estimation model may be trained to learn how to obtain a mask from a noisy audio feature through calculation. For a specific process of model training, refer to an embodiment corresponding to FIG. 8.

In an implementation, the target mask estimation model may include a mask estimation network layer and a mask output layer. In this case, the obtained target audio feature may be first input to the mask estimation network layer, and the mask estimation network layer may perform mask estimation on the input target audio feature to obtain a hidden feature corresponding to the target audio feature. Further, the hidden feature may be input to the mask output layer. The mask output layer performs feature combination on the hidden feature to obtain a target mask corresponding to the current audio frame. A length of the target mask is N (the same as a quantity of acoustic bands obtained through division). In embodiments of this application, the target mask may be used for suppressing noise data in the raw audio data to obtain enhanced audio data corresponding to the raw audio data.

In embodiments of this application, the mask may also be referred to as a gain or a band gain, and may include but is not limited to an IRM, an ideal binary mask (IBM), an optimal ratio mask (ORM), and the like. A type of the target mask is not limited herein.

Based on an assumption that target speech and babble noise are orthogonal, to be specific, target speech and babble noise are uncorrelated, the IRM directly describes a ratio of pure speech energy to noisy speech energy in a time-frequency unit. A value of the IRM ranges from 0 to 1. A larger value indicates a higher proportion of the target speech in the time-frequency unit.

The target speech is sparsely distributed in time/frequency domain. For a specific time-frequency unit, a difference between energy of the target speech and energy of the babble noise is usually large. Therefore, a signal-to-noise ratio in most time-frequency units is excessively high or excessively low. The IBM is a simplified description of this case, and discretizes a continuous signal-to-noise ratio of a time-frequency unit into two states: 1 and 0. In a time-frequency unit, target speech being dominant (a signal-to-noise ratio is high) is marked as 1, and babble noise being dominant (a signal-to-noise ratio is low) is marked as 0. Finally, the IBM is multiplied by noisy speech. This means resetting a time-frequency unit with a low signal-to-noise ratio to eliminate babble noise. Therefore, the IBM may be considered as a binary version of the IRM. A definition of the ORM is derived by minimizing a mean square error of pure speech and estimated target speech, and is quite similar to that of the IRM.

In some embodiments, the mask estimation network layer may include a first mask estimation network layer, a second mask estimation network layer, and a third mask estimation network layer that have a skip connection layer in between. The skip connection layer between the first mask estimation network layer, the second mask estimation network layer, and the third mask estimation network layer can avoid network overfitting.

A specific process of performing, by the mask estimation network layer, mask estimation on the input target audio feature may be as follows:

The target audio feature is input to the first mask estimation network layer to output a first intermediate feature.

Then the first intermediate feature and the target audio feature are concatenated based on a skip connection layer between the first mask estimation network layer and the second mask estimation network layer to obtain a second intermediate feature. Then the obtained second intermediate feature may be input to the second mask estimation network layer to output a third intermediate feature.

Further, the third intermediate feature, the target audio feature, and the first intermediate feature are concatenated, based on a skip connection layer between the first mask estimation network layer and the third mask estimation network layer, and a skip connection layer between the second mask estimation network layer and the third mask estimation network layer, to obtain a fourth intermediate feature.

The fourth intermediate feature is input to the third mask estimation network layer to output the hidden feature corresponding to the target audio feature.

In some embodiments, the target mask estimation model may alternatively include more or fewer mask estimation network layers. A specific quantity of mask estimation network layers is not limited in embodiments of this application.

Network structures of the first mask estimation network layer, the second mask estimation network layer, and the third mask estimation network layer in the mask estimation network layer may be gated recurrent units (GRUs) or long short-term memory networks (LSTMs). A network structure of the mask output layer may the fully connected layer or the like. Specific structures of the mask estimation network layer and the mask output layer are not limited in embodiments of this application.

The GRU is a gating mechanism in a recurrent neural network. Similar to the LSTM with a forget gate, the GRU includes an update gate and a reset gate. Compared with the LSTM, the GRU does not include an output gate, and has fewer parameters than the LSTM. Therefore, when the GRU is used for designing the mask estimation network layer, a lightweight mask estimation model may be obtained.

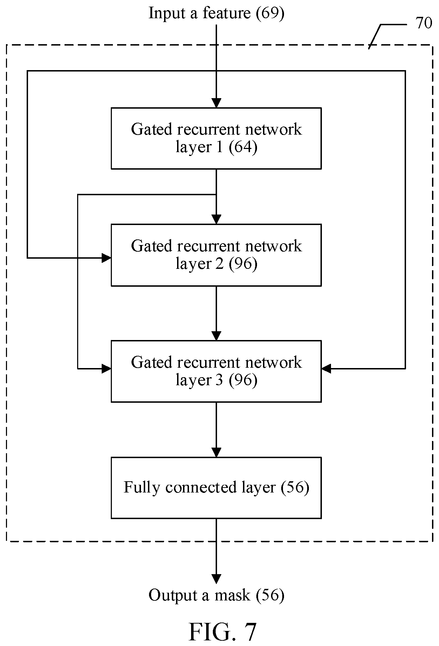

FIG. 7 is a schematic diagram of a network structure of a mask estimation model according to an embodiment of this application. As shown in FIG. 7, after a corresponding audio feature (for example, an audio feature with a size of 69) is obtained, the audio feature may be input to a mask estimation model 70 (namely, the target mask estimation model). The model may include a gated recurrent network layer 1 (namely, the first mask estimation network layer), a gated recurrent network layer 2 (namely, the second mask estimation network layer), a gated recurrent network layer 3 (namely, the third mask estimation network layer), and a fully connected layer (namely, the mask output layer). A three-layer simple GRU neural network is used for modeling the audio feature. The last layer, namely, the fully connected layer, is used for outputting a gain (namely, a mask).

In this embodiment, a quantity of features corresponding to each audio frame input to the model may be 69. The three gated recurrent network layers that the audio frame passes may include 64, 96, and 96 nodes (also referred to as neurons or perceptrons) respectively. Correspondingly, feature dimensionality of a first intermediate feature outputted by the gated recurrent network layer 1 is 64, feature dimensionality of a third intermediate feature outputted by the gated recurrent network layer 2 is 96, and feature dimensionality of a hidden feature outputted by the gated recurrent network layer 3 is 96. In addition, the fully connected layer may include 56 nodes. In this case, dimensionality of a finally outputted mask is 56 (to be specific, 56 mask values are outputted).

An appropriate activation function may be used for each network layer. For example, a rectified linear unit (ReLu) function may be used for the gated recurrent network layer 1, a ReLu function may be used for the gated recurrent network layer 2, and a hyperbolic tangent (tanh) function may be used for the gated recurrent network layer 3. When the IRM is used for the mask, a sigmoid function may be used for the fully connected layer to ensure that a value range of the outputted mask is (0, 1). Another function may alternatively be used as an activation function for each of the foregoing network layers. This is not limited in embodiments of this application.

The target mask estimation model used in embodiments of this application is a lightweight neural network. The three mask estimation network layers in the model can achieve good mask estimation effect, and include a few network parameters, so that network complexity is low. This can reduce calculation time and CPU consumption.

It can be understood that energy of noisy speech is certainly greater than that of pure speech under an assumption that noise and speech are uncorrelated. N acoustic bands are obtained through division in frequency domain for calculating energy. For each acoustic band, the band including less noise indicates that speech is purer and a band gain is larger. Based on this, for noisy speech, each acoustic band is multiplied by a gain. A physical meaning lies in that the acoustic band may be multiplied by a small gain when noise in the acoustic band is large, and the acoustic band may be multiplied by a large gain when noise in the acoustic band is small. In this way, speech can be enhanced, and noise can be suppressed.

In embodiments of this application, after obtaining the target mask (namely, a band gain) through the foregoing steps, the user terminal may perform noise suppression by using the target mask. A specific process may be as follows:

When a length (namely, N) of the target mask is less than a length (namely, S1) of the current audio frame, interpolation is performed on the target mask to obtain an interpolation mask. In this case, a length of the obtained interpolation mask is the same as the length (for example, 257 frequency bins) of the current audio frame.

Further, the interpolation mask may be multiplied by the current audio frame. To be specific, each mask value in the interpolation mask is correspondingly applied to each frequency bin obtained through Fourier transform in the current audio frame. Then inverse Fourier transform may be performed on a product of the interpolation mask and the current audio frame, to obtain target audio data. The target audio data refers to the audio data with noise suppressed in the current audio frame. That is, an enhanced time domain speech signal is obtained through restoration.

It can be understood that a process of performing noise suppression on other audio data is similar to the process of performing noise suppression on the current audio frame. Details are not described herein again.

Finally, after noise suppression is performed on each audio frame associated with the raw audio data, enhanced audio data corresponding to the raw audio data may be determined based on target audio data corresponding to each audio frame. In this case, the obtained enhanced audio data includes quite small noise, and speech data of a service object is not mistakenly eliminated. Therefore, the enhanced audio data has very high speech fidelity.

It can be learned from the foregoing descriptions that, in embodiments of this application, a plurality of audio features, including the cepstrum coefficients, the first-order time derivatives, the second-order time derivatives, and the dynamic spectrum feature, may be comprehensively considered during speech enhancement on the raw audio data. In this way, a time-frequency relationship between the speech data of the service object and babble noise data can be more accurately described. To be specific, a more accurate target mask can be obtained. Wanted speech is not suppressed during suppression of the babble noise. Therefore, each output mask is applied to a corresponding audio frame. This can effectively suppress noise data in audio data and improve speech fidelity. Especially, in a real-time audio /video communication scenario (for example, a real-time audio/video conferencing scenario), high-quality and high-definition speech can be provided for a user to improve user experience.

In addition, in embodiments of this application, a corresponding audio feature is extracted from noisy audio data by using the DSP technology, and then the extracted audio feature is input to a lightweight neural network model (namely, the target mask estimation model) for rapid mask estimation. Therefore, lower network complexity is required in embodiments of this application, so that calculation complexity and central processing unit (CPU) consumption can be reduced, and efficiency of audio data processing is improved.

FIG. 8 is a schematic flowchart of an audio data processing method according to an embodiment of this application. It can be understood that the method provided in embodiments of this application may be performed by a computer device. The computer device herein includes but is not limited to a user terminal or a service server, for example, the user terminals 200a, the user terminals 200b, the user terminals 200c, ..., the user terminal 200n, or the service server 100 shown in FIG. 1. In embodiments of this application, an example in which the computer device is a user terminal is used to describe a specific process of performing, by the user terminal, model training on an initial mask estimation model. As shown in FIG. 8, the method may include at least the following step S201 to step S205.

Step S201: Obtain a current sample audio frame and K historical sample audio frames that are associated with sample audio data, and obtain a sample mask corresponding to the current sample audio frame.

The user terminal may obtain the sample audio data from an audio database including massive audio data. The sample audio data herein may be a noisy speech signal (for example, audio data carrying babble noise and speech data of a sample object).

Then window-based frame preprocessing, time-frequency transform, or other operations may be performed on the sample audio data to obtain the current sample audio frame and the K historical sample audio frames that are associated with the sample audio data. The current sample audio frame and the K historical sample audio frames are spectral frames, each of the K historical sample audio frames is a spectral frame preceding the current sample audio frame, and K is a positive integer. For a specific process, refer to step S101 in the embodiment corresponding to FIG. 3. Details are not described herein again.

In addition, for subsequent calculation of a loss function, the user terminal may further obtain the sample mask corresponding to the current sample audio frame.

Step S202: Determine N sample cepstrum coefficients of the current sample audio frame, N being a positive integer greater than 1; determine, based on the N sample cepstrum coefficients, M sample first-order time derivatives and M sample second-order time derivatives that are associated with the current sample audio frame, M being a positive integer less than N.

The user terminal may map a plurality of frequency bins included in the current sample audio frame to N sample acoustic bands that are obtained through division, and perform cepstrum processing on each sample acoustic band to obtain a target sample cepstrum coefficient corresponding to each sample acoustic band.

Then the M sample first-order time derivatives and the M sample second-order time derivatives that are associated with the current sample audio frame may be obtained based on the obtained N sample cepstrum coefficients, N being a positive integer greater than 1, and M being a positive integer less than N. In some embodiments, refer to step S 102 in the embodiment corresponding to FIG. 3. Details are not described herein again.

Step S203: Obtain N historical sample cepstrum coefficients corresponding to each of the K historical sample audio frames, and determine, based on obtained K×N historical sample cepstrum coefficients, a sample dynamic spectrum feature associated with the current sample audio frame.

The user terminal may obtain N historical sample cepstrum coefficients corresponding to any two adjacent historical sample audio frames in the K historical sample audio frames; then may determine a sample interframe difference value between the two adjacent historical sample audio frames based on two groups of historical sample cepstrum coefficients that are obtained; and finally may determine, based on K-1 sample interframe difference values, a sample dynamic spectrum feature associated with the current sample audio frame. In some embodiments, refer to step S103 in the embodiment corresponding to FIG. 3. Details are not described herein again.

Step S204: Input the N sample cepstrum coefficients, the M sample first-order time derivatives, the M sample second-order time derivatives, and the sample dynamic spectrum feature to an initial mask estimation model to output a predicted mask corresponding to the current sample audio frame.

The user terminal may use the obtained N sample cepstrum coefficients, M sample first-order time derivatives, M sample second-order time derivatives, and sample dynamic spectrum feature as a sample audio feature of the current sample audio frame, and then may input the sample audio feature to the initial mask estimation model. The initial mask estimation model outputs the predicted mask corresponding to the current sample audio frame.

For an exemplary network structure of the initial mask estimation model, refer to the embodiment corresponding to FIG. 7. In some embodiments, refer to step S104 in the embodiment corresponding to FIG. 3. Details are not described herein again.

Step S205: Perform iterative training on the initial mask estimation model based on the predicted mask and the sample mask to obtain a target mask estimation model, the target mask estimation model being used for outputting a target mask corresponding to a current audio frame associated with raw audio data.

The user terminal may generate a loss function based on the predicted mask and the sample mask, and then may modify model parameters in the initial mask estimation model based on the loss function. Through a plurality of times of iterative training, the target mask estimation model for outputting the target mask corresponding to the current audio frame associated with the raw audio data may be finally obtained. The target mask is used for suppressing noise data in the raw audio data to obtain enhanced audio data corresponding to the raw audio data.

In an optional implementation, the loss function used for model training may be Huber loss (a parameterized loss function used for regression problems). A formula of the loss function is described as follows: $loss = \left\{\begin{matrix}0.5 ∗ \left({g}_{true}-{g}_{pred}\right) & if \left|{g}_{true}-{g}_{pred}\right| \leq d \\ 0.5 ∗ {\left({g}_{true}-{g}_{pred}\right)}^{2} + d ∗ \left(\left|{g}_{true}-{g}_{pred}\right|-d\right) & if \left|{g}_{true}-{g}_{pred}\right| > d\end{matrix}\right.$

*gₜᵣᵤₑ* indicates the sample mask. *g_{pred}* indicates the predicted mask, and a hyperparameter d in loss may be set to 0.1.

In addition, a loss function in another form may alternatively be used. This is not limited in embodiments of this application.

FIG. 9 is a schematic flowchart of model training according to an embodiment of this application. As shown in FIG. 9, a neural network model may be designed to model an extracted audio feature to obtain a corresponding mask, to suppress babble noise in audio data.

Specifically, after training speech 901 (namely, sample audio data) is obtained, speech preprocessing 902 (namely, audio preprocessing) may be performed on the training speech to obtain a plurality of associated sample audio frames. Then audio feature extraction 903 may be performed on each sample audio frame sequentially to obtain a sample audio feature corresponding to each sample audio frame. Then these sample audio features may be separately input to an initial mask estimation model to perform network model training 904, to obtain an intermediate mask estimation model.

In this case, generalization performance of the obtained intermediate mask estimation model further needs to be verified. Similarly, speech preprocessing 906 may be performed on obtained test speech 905 (also referred to as test audio data, which may be obtained together with the sample audio data), to obtain a plurality of test audio frames. Then audio feature extraction 907 may be performed on each test audio frame sequentially to obtain a test audio feature corresponding to each test audio frame.

Further, these test audio features may be separately input to the intermediate mask estimation model, and the intermediate mask estimation model outputs a corresponding mask. In addition, the obtained mask may be applied to a corresponding test audio frame to obtain a spectrum with babble noise suppressed. Then inverse Fourier transform may be performed on the obtained spectrum, and a time domain speech signal is reconstructed 908, to implement speech enhancement 909.

When an obtained test result meets an expectation, the intermediate mask estimation model may be used as a target mask estimation model that can be directly used subsequently.

Further, refer to FIG. 10. FIG. 10 is a schematic diagram of noise reduction effect according to an embodiment of this application. As shown in FIG. 10, a spectrum corresponding to a segment of speech that includes babble noise is a spectrum 10A in FIG. 10. After noise suppression is performed on the speech with noise by using the method provided in this application and the target mask estimation model, a spectrum corresponding to obtained enhanced speech is a spectrum 10B in FIG. 10. It can be learned from comparison between the two spectra that, in the method provided in this application, babble noise can be effectively suppressed while complete speech is retained.

It can be learned from the foregoing descriptions that, in embodiments of this application, the target mask estimation model for outputting a mask corresponding to an audio frame may be obtained through training on the initial mask estimation model. The model is a lightweight neural network model. This can reduce complexity of calculation during speech enhancement, control a size of an installation package when the model is applied to a scenario, and reduce CPU consumption. In addition, the trained target mask estimation model can automatically and quickly output an estimated mask. This can improve efficiency of speech enhancement on audio data.

FIG. 11 is a schematic structural diagram of an audio data processing apparatus according to an embodiment of this application. The audio data processing apparatus 1 may be a computer program (including program code) that is run on a computer device. For example, the audio data processing apparatus 1 is application software. The apparatus may be configured to perform corresponding steps in the audio data processing method provided in embodiments of this application. As shown in FIG. 11, the audio data processing apparatus 1 may include a first obtaining module 11, a second obtaining module 12, a third obtaining module 13, a mask estimation module 14, a band mapping module 15, a cepstrum processing module 16, and a noise suppression module 17.

The first obtaining module 11 is configured to obtain a current audio frame and K historical audio frames that are associated with raw audio data, the current audio frame and the K historical audio frames being spectral frames, each of the K historical audio frames preceding the current audio frame in time domain, and K being a positive integer.

The first obtaining module 11 may include an audio preprocessing unit 111, a time-frequency transform unit 112, and a frame determining unit 113.

The audio preprocessing unit 111 is configured to divide the raw audio data into H audio data segments by using a window function, H being a positive integer greater than 1.

The time-frequency transform unit 112 is configured to for each of the H audio data segments, perform time-frequency transform on the respective audio data segment to obtain an audio frame.

In an implementation, the time-frequency transform unit 112 is specifically configured to: perform Fourier transform on the respective audio data segment to obtain a direct-current component frequency bin and 2S frequency bins in frequency domain, the 2S frequency bins comprising first S frequency bins related to a first frequency-bin type and second S frequency bins related to a second frequency-bin type, and S being a positive integer; and determine, based on the first S frequency bins and the direct-current component frequency bin, the audio frame corresponding to the respective audio data segment.

The frame determining unit 113 is configured to determine, from obtained H audio frames, the current audio frame and K historical audio frames preceding the current audio frame, K being less than H.

For specific functional implementations of the audio preprocessing unit 111, the time-frequency transform unit 112, and the frame determining unit 113, refer to step S101 in the embodiment corresponding to FIG. 3. Details are not described herein again.

The second obtaining module 12 is configured to: determine N cepstrum coefficients of the current audio frame, N being a positive integer greater than 1; determine, based on the N cepstrum coefficients, M first-order time derivatives and M second-order time derivatives that are associated with the current audio frame, M being a positive integer less than N.

The second obtaining module 12 may include a first differential unit 121 and a second differential unit 122.

The first differential unit 121 is configured to perform a first differential operation on the N cepstrum coefficients to obtain (N-1) differential operation values, using each of the (N-1) differential operation values as a first-order time derivative; obtain, from (N-1) first-order time derivatives, the M first-order time derivatives.

The second differential unit 122 is configured to perform a secondary differential operation on the (N-1) first-order time derivatives to obtain (N-2) differential operation values, using each of the (N-2) differential operation values as a second-order time derivative; and obtain, from (N-2) second-order time derivatives, the M second-order time derivatives..

For specific functional implementations of the first differential unit 121 and the second differential unit 122., refer to step S102 in the embodiment corresponding to FIG. 3. Details are not described herein again.

The third obtaining module 13 is configured to obtain N historical cepstrum coefficients corresponding to each of the K historical audio frames, and determine, based on obtained K×N historical cepstrum coefficients, a dynamic spectrum feature associated with the current audio frame.

The third obtaining module 13 may include a frame obtaining unit 131, a coefficient obtaining unit 132, a difference determining unit 133, and a feature determining unit 134.

The frame obtaining unit 131 is configured to obtain any two adjacent historical audio frames from the K historical audio frames as a first historical audio frame and a second historical audio frame.

The coefficient obtaining unit 132 is configured to obtain, from a cache related to the current audio frame, first N historical cepstrum coefficients corresponding to the first historical audio frame and second N historical cepstrum coefficients corresponding to the second historical audio frame.

The difference determining unit 133 is configured to for any two adjacent historical audio frames from the K historical audio frames, use N difference values respectively between the first N historical cepstrum coefficients and the second N historical cepstrum coefficients as an interframe difference value between the first historical audio frame and the second historical audio frame; and determine the dynamic spectrum feature based on K-1 interframe difference values between adjacent historical audio frames in the K historical audio frames.

The difference determining unit 133 may include: a coefficient difference obtaining subunit 1331 and a difference value determining subunit 1332.

The coefficient difference obtaining subunit 1331 is configured to: obtain a historical cepstrum coefficient Lp from N historical cepstrum coefficients included in first historical cepstrum coefficients, and obtain a historical cepstrum coefficient Lq from N historical cepstrum coefficients included in second historical cepstrum coefficients, p and q being positive integers less than or equal to N, and p=q; and obtain a coefficient difference value between the historical cepstrum coefficient Lp and the historical cepstrum coefficient Lq.

The difference value determining subunit 1332 is configured to determine band difference values between the first historical cepstrum coefficients and the second historical cepstrum coefficients based on coefficient difference values, and use the band difference values as an interframe difference value between the first historical audio frame and the second historical audio frame.

For specific functional implementations of the coefficient difference obtaining subunit 1331 and the difference value determining subunit 1332, refer to step S103 in the embodiment corresponding to FIG. 3. Details are not described herein again.

The feature determining unit 134 is configured to determine the dynamic spectrum feature associated with the current audio frame based on K-1 interframe difference values between adjacent historical audio frames in the K historical audio frames.

For specific functional implementations of the frame obtaining unit 131, the coefficient obtaining unit 132, the difference determining unit 133, and the feature determining unit 134, refer to step S103 in the embodiment corresponding to FIG. 3. Details are not described herein again.

The mask estimation module 14 is configured to input the N cepstrum coefficients, the M first-order time derivatives, the M second-order time derivatives, and the dynamic spectrum feature to a target mask estimation model to output a target mask corresponding to the current audio frame, the target mask being used for suppressing noise data in the raw audio data.

In an implementation, the target mask estimation model includes a mask estimation network layer and a mask output layer; and the mask estimation module 14 may include a mask estimation unit 141 and a mask output unit 142.

The mask estimation unit 141 is configured to use the N cepstrum coefficients, the M first-order time derivatives, the M second-order time derivatives, and the dynamic spectrum feature as a target audio feature of the current audio frame, and input the target audio feature to the mask estimation network layer to perform mask estimation on the target audio feature to obtain a hidden feature corresponding to the target audio feature.

In an implementation, the mask estimation network layer includes a first mask estimation network layer, a second mask estimation network layer, and a third mask estimation network layer that have a skip connection layer; and the mask estimation unit 141 may include a first estimation subunit 1411, a second estimation subunit 1412, and a third estimation subunit 1413.

The first estimation subunit 1411 is configured to input the target audio feature to the first mask estimation network layer to output a first intermediate feature.

The second estimation subunit 1412 is configured to concatenate the first intermediate feature and the target audio feature based on a skip connection layer between the first mask estimation network layer and the second mask estimation network layer to obtain a second intermediate feature, input the second intermediate feature to the second mask estimation network layer to output a third intermediate feature.

The third estimation subunit 1413 is configured to concatenate the third intermediate feature, the target audio feature, and the first intermediate feature, based on a skip connection layer between the first mask estimation network layer and the third mask estimation network layer and a skip connection layer between the second mask estimation network layer and the third mask estimation network layer, to obtain a fourth intermediate feature; and input the fourth intermediate feature to the third mask estimation network layer to output the hidden feature.

For specific functional implementations of the first estimation subunit 1411, the second estimation subunit 1412, and the third estimation subunit 1413, refer to step S104 in the embodiment corresponding to FIG. 3. Details are not described herein again.

The mask output unit 142 is configured to input the hidden feature to the mask output layer, the mask output layer performing feature combination on the hidden feature to obtain the target mask corresponding to the current audio frame.

For specific functional implementations of the mask estimation unit 141 and the mask output unit 142, refer to step S104 in the embodiment corresponding to FIG. 3. Details are not described herein again.

In an implementation, the current audio frame includes S1 frequency bins, the S1 frequency bins include a direct-current component frequency bin and S2 frequency bins related to a frequency-bin type, and both S1 and S2 are positive integers;
the band mapping module 15 is configured to map the S1 frequency bins to N acoustic bands, S1 being greater than or equal to N; and
the cepstrum processing module 16 is configured to for each of the N acoustic bands, perform cepstrum processing on the respective acoustic band to obtain a target cepstrum coefficient.

In an implementation, the cepstrum processing module 16 may include an energy obtaining unit 161 and a cosine transform unit 162.

The energy obtaining unit 161 is configured to determine original band energy of the respective acoustic band; perform logarithmic transform on the original band energy to obtain logarithmic band energy of the respective acoustic band.

The cosine transform unit 162 is configured to perform discrete cosine transform on the logarithmic band energy to obtain the target cepstrum coefficient.

For specific functional implementations of the energy obtaining unit 161 and the cosine transform unit 162, refer to step S 102 in the embodiment corresponding to FIG. 3. Details are not described herein again.

The noise suppression module 17 is configured to: perform interpolation on the target mask to obtain an interpolation mask, a length of the interpolation mask being the same as a length of the current audio frame; perform inverse Fourier transform on a product of the interpolation mask and the current audio frame, to obtain target audio data, the target audio data being audio data with noise suppressed in the current audio frame; and determine, based on target audio data corresponding to each of audio frames associated with the raw audio data, enhanced audio data corresponding to the raw audio data.

For specific functional implementations of the first obtaining module 11, the second obtaining module 12, the third obtaining module 13, the mask estimation module 14, the band mapping module 15, the cepstrum processing module 16, and the noise suppression module 17, refer to step S101 to step S104 in the embodiment corresponding to FIG. 3. Details are not described herein again. In addition, the description of beneficial effects of the same method are not described herein again.

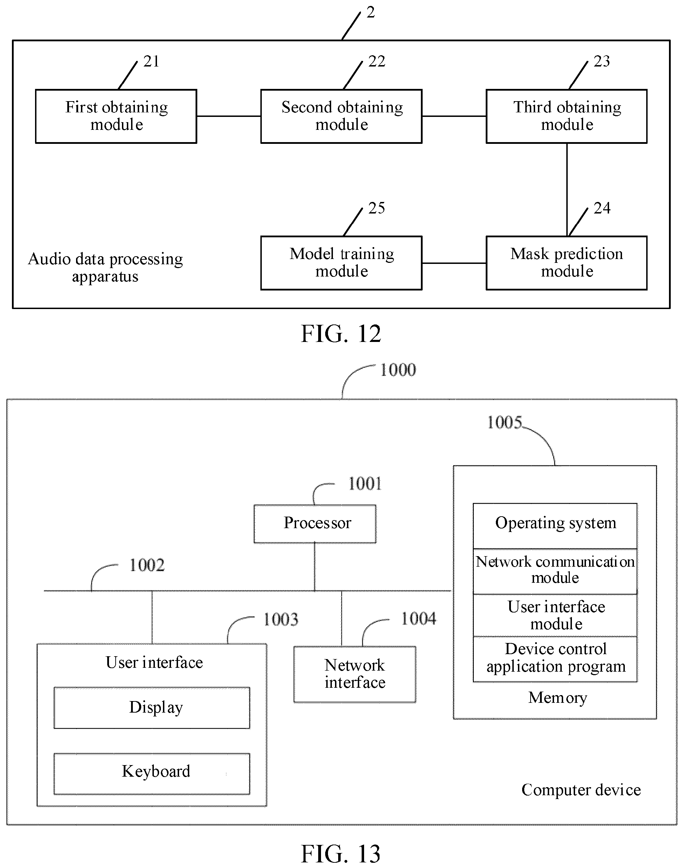

FIG. 12 is a schematic structural diagram of an audio data processing apparatus according to an embodiment of this application. The audio data processing apparatus 2 may be a computer program (including program code) that is run on a computer device. For example, the audio data processing apparatus 2 is application software. The apparatus may be configured to perform corresponding steps in the audio data processing method provided in embodiments of this application. As shown in FIG. 12, the audio data processing apparatus 2 may include a first obtaining module 21, a second obtaining module 22, a third obtaining module 23, a mask prediction module 24, and a model training module 25.

The first obtaining module 21 is configured to obtain a current sample audio frame and K historical sample audio frames that are associated with sample audio data, and obtaining a sample mask corresponding to the current sample audio frame, the current sample audio frame and the K historical sample audio frames being spectral frames, each of the K historical sample audio frames preceding the current sample audio frame in time domain, and K being a positive integer.

The second obtaining module 22 is configured to: determine N sample cepstrum coefficients of the current sample audio frame, N being a positive integer greater than 1; determine, based on the N sample cepstrum coefficients, M sample first-order time derivatives and M sample second-order time derivatives that are associated with the current sample audio frame, M being a positive integer less than N.

The third obtaining module 23 is configured to obtain N historical sample cepstrum coefficients corresponding to each of the K historical sample audio frames, and determine, based on obtained K×N historical sample cepstrum coefficients, a sample dynamic spectrum feature associated with the current sample audio frame.

The mask prediction module 24 is configured to input the N sample cepstrum coefficients, the M sample first-order time derivatives, the M sample second-order time derivatives, and the sample dynamic spectrum feature to an initial mask estimation model to output a predicted mask corresponding to the current sample audio frame.

The model training module 25 is configured to perform iterative training on the initial mask estimation model based on the predicted mask and the sample mask to obtain a target mask estimation model, the target mask estimation model being used for outputting a target mask corresponding to a current audio frame associated with raw audio data, and the target mask being used for suppressing noise data in the raw audio data to obtain enhanced audio data corresponding to the raw audio data.

For specific functional implementations of the first obtaining module 21, the second obtaining module 22, the third obtaining module 23, the mask prediction module 24, and the model training module 25, refer to step S201 to step S205 in the embodiment corresponding to FIG. 8. Details are not described herein again. In addition, the description of beneficial effects of the same method are not described herein again.

FIG. 13 is a schematic structural diagram of a computer device according to an embodiment of this application. As shown in FIG. 13, the computer device 1000 may include: a processor 1001, a network interface 1004, and a memory 1005. In addition, the computer device 1000 may further include a user interface 1003 and at least one communications bus 1002. The communications bus 1002 is configured to implement connection and communication between these components. The user interface 1003 may include a display and a keyboard. , the user interface 1003 may further include a standard wired interface and a standard wireless interface. The network interface 1004 may include a standard wired interface and wireless interface (for example, a Wi-Fi interface). The memory 1005 may be a high-speed RAM memory, or may be a non-volatile memory, for example, at least one magnetic disk memory. In some embodiments, the memory 1005 may be at least one storage apparatus located away from the processor 1001. As shown in FIG. 13, the memory 1005 used as a computer-readable storage medium may include an operating system, a network communication module, a user interface module, and a device-control application program.

In the computer device 1000 shown in FIG. 13, the network interface 1004 may provide a network communication function, the user interface 1003 is mainly configured to provide an input interface for a user, and the processor 1001 may be configured to invoke the device-control application program stored in the memory 1005 to perform the descriptions of the audio data processing method in the embodiment corresponding to either of FIG. 3 and FIG. 8. In addition, the description of beneficial effects of the same method are not described herein again.

Embodiments of this application further provide a computer-readable storage medium. The computer-readable storage medium stores a computer program to be executed by the audio data processing apparatus 1 and the audio data processing apparatus 2, and the computer program includes program instructions. When the program instructions are executed by a processor, the descriptions of the audio data processing method in the embodiment corresponding to either of FIG. 3 and FIG. 8 can be performed. Therefore, details are not described herein again. In addition, the description of beneficial effects of the same method are not described herein again. For technical details that are not disclosed in the computer-readable storage medium embodiments of this application, refer to the descriptions of the method embodiments of this application.

The computer-readable storage medium may be an internal storage unit of the audio data processing apparatus provided in any one of the foregoing embodiments or the computer device in any one of the foregoing embodiments, for example, a hard disk drive or a memory of the computer device. Alternatively, the computer-readable storage medium may be an external storage device of the computer device, for example, a plug-in hard disk, a smart media card (SMC), a secure digital (SD) card, a flash card, or the like that is configured on the computer device. Further, the computer-readable storage medium may alternatively include both an internal storage unit of the computer device and an external storage device. The computer-readable storage medium is configured to store the computer program and other programs and data that are required by the computer device. The computer-readable storage medium may be further configured to temporarily store data that has been output or is to be output.

Embodiments of this application further provide a computer program product or a computer program. The computer program product or the computer program includes computer instructions, and the computer instructions are stored in a computer-readable storage medium. A processor of a computer device reads the computer instructions from the computer-readable storage medium, and the processor executes the computer instructions, so that the computer device performs the method provided in the embodiment corresponding to either of FIG. 3 and FIG. 8. In addition, the description of beneficial effects of the same method are not described herein again. For technical details that are not disclosed in the computer program product or computer program embodiments of this application, refer to the descriptions of the method embodiments of this application.

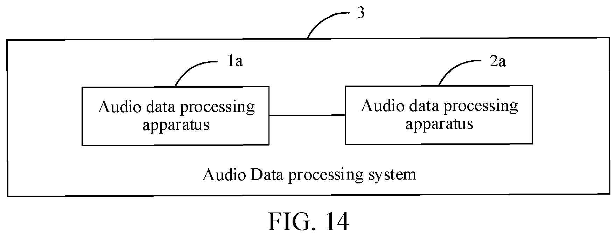

Further, FIG. 14 is a schematic structural diagram of an audio data processing system according to an embodiment of this application. The audio data processing system 3 may include an audio data processing apparatus 1a and an audio data processing apparatus 2a.

The audio data processing apparatus 1a may be the audio data processing apparatus 1 in the embodiment corresponding to FIG. 11. It can be understood that the audio data processing apparatus 1a may be integrated in the computer device 20 in the embodiment corresponding to FIG. 2. Therefore, details are not described herein again.

The audio data processing apparatus 2a may be the audio data processing apparatus 2 in the embodiment corresponding to FIG. 12. It can be understood that the audio data processing apparatus 2a may be integrated in the computer device 20 in the embodiment corresponding to FIG. 2. Therefore, details are not described herein again.

In addition, the description of beneficial effects of the same method are not described herein again. For technical details that are not disclosed in the audio data processing system embodiments of this application, refer to the descriptions of the method embodiments of this application.

In the specification, claims, and accompanying drawings of embodiments of this application, the terms "first", "second", and the like are merely intended to distinguish between different objects but do not indicate a particular order. In addition, the term "include" and any variants thereof are intended to cover a non-exclusive inclusion. For example, a process, a method, an apparatus, a product, or a device that includes a series of steps or units is not limited to the listed steps or modules, but further includes other unlisted steps or modules, or further includes other inherent steps or units of the process, the method, the apparatus, the product, or the device.

A person of ordinary skill in the art may be aware that, in combination with the examples described in embodiments disclosed in this specification, units and algorithm steps can be implemented by electronic hardware, computer software, or a combination thereof. To clearly describe interchangeability between hardware and software, the foregoing generally describes compositions and steps of the examples based on functions. Whether the functions are performed by hardware or software depends on particular applications and design constraints of technical solutions. A person skilled in the art may use different methods to implement the described functions for each particular application, but it is not to be considered that the implementation goes beyond the scope of this application.

What is disclosed above is merely exemplary embodiments of this application, and certainly is not intended to limit the scope of the invention which is defined by the appended claims.

## Claims

1. An audio data processing method, executable by a computer device and comprising:
obtaining a current audio frame and K historical audio frames that are associated with raw audio data, the current audio frame and the K historical audio frames being spectral frames, each of the K historical audio frames preceding the current audio frame in time domain, and K being a positive integer;
determining N cepstrum coefficients of the current audio frame, N being a positive integer greater than 1;
determining, based on the N cepstrum coefficients, M first-order time derivatives and M second-order time derivatives that are associated with the current audio frame, M being a positive integer less than N;
obtaining N historical cepstrum coefficients corresponding to each of the K historical audio frames, and determining, based on obtained K×N historical cepstrum coefficients, a dynamic spectrum feature associated with the current audio frame; and
inputting the N cepstrum coefficients, the M first-order time derivatives, the M second-order time derivatives, and the dynamic spectrum feature to a target mask estimation model to output a target mask corresponding to the current audio frame, the target mask being used for suppressing noise data in the raw audio data.

2. The method according to claim 1, wherein the obtaining a current audio frame and K historical audio frames that are associated with raw audio data comprises:
dividing the raw audio data into H audio data segments by using a window function, H being a positive integer greater than 1;
for each of the H audio data segments, performing time-frequency transform on the respective audio data segment to obtain an audio frame; and
determining, from obtained H audio frames, the current audio frame and K historical audio frames preceding the current audio frame, K being less than H.

3. The method according to claim 2, wherein the performing time-frequency transform on the respective audio data segment to obtain an audio frame comprises:
performing Fourier transform on the respective audio data segment to obtain a direct-current component frequency bin and 2S frequency bins in frequency domain, the 2S frequency bins comprising first S frequency bins related to a first frequency-bin type and second S frequency bins related to a second frequency-bin type, and S being a positive integer; and
determining, based on the first S frequency bins and the direct-current component frequency bin, the audio frame corresponding to the respective audio data segment.

4. The method according to claim 1, wherein the current audio frame comprises S1 frequency bins, the S1 frequency bins comprise a direct-current component frequency bin and S2 frequency bins related to a frequency-bin type, and both S1 and S2 are positive integers; and the determining N cepstrum coefficients of the current audio frame comprises:
mapping the S1 frequency bins to N acoustic bands, S1 being greater than or equal to N; and
for each of the N acoustic bands, performing cepstrum processing on the respective acoustic band to obtain a target cepstrum coefficient.

5. The method according to claim 4, wherein the performing cepstrum processing on the respective acoustic band to obtain a target cepstrum coefficient comprises:
determining original band energy of the respective acoustic band;
performing logarithmic transform on the original band energy to obtain logarithmic band energy of the respective acoustic band; and
performing discrete cosine transform on the logarithmic band energy to obtain the target cepstrum coefficient.

6. The method according to claim 1, wherein the determining, based on the N cepstrum coefficients, M first-order time derivatives and M second-order time derivatives that are associated with the current audio frame comprises:
performing a first differential operation on the N cepstrum coefficients to obtain (N-1) differential operation values, using each of the (N-1) differential operation values as a first-order time derivative;
obtaining, from (N-1) first-order time derivatives, the M first-order time derivatives;
performing a secondary differential operation on the (N-1) first-order time derivatives to obtain (N-2) differential operation values, using each of the (N-2) differential operation values as a second-order time derivative; and
obtaining, from (N-2) second-order time derivatives, the M second-order time derivatives.

7. The method according to claim 1, wherein the obtaining N historical cepstrum coefficients corresponding to each of the K historical audio frames comprises:
obtaining any two adjacent historical audio frames from the K historical audio frames as a first historical audio frame and a second historical audio frame; and
obtaining, from a cache related to the current audio frame, first N historical cepstrum coefficients corresponding to the first historical audio frame and second N historical cepstrum coefficients corresponding to the second historical audio frame;
wherein preferably:
the determining, based on obtained K×N historical cepstrum coefficients, a dynamic spectrum feature associated with the current audio frame comprises:
for any two adjacent historical audio frames from the K historical audio frames, using N difference values respectively between the first N historical cepstrum coefficients and the second N historical cepstrum coefficients as an interframe difference value between the first historical audio frame and the second historical audio frame; and
determining the dynamic spectrum feature based on K-1 interframe difference values between adjacent historical audio frames in the K historical audio frames.

8. The method according to claim 1, wherein the target mask estimation model comprises a mask estimation network layer and a mask output layer; and
the inputting the N cepstrum coefficients, the M first-order time derivatives, the M second-order time derivatives, and the dynamic spectrum feature to a target mask estimation model, the target mask estimation model outputting a target mask corresponding to the current audio frame comprises:
using the N cepstrum coefficients, the M first-order time derivatives, the M second-order time derivatives, and the dynamic spectrum feature as a target audio feature of the current audio frame, inputting the target audio feature to the mask estimation network layer to perform mask estimation on the target audio feature, to obtain a hidden feature corresponding to the target audio feature; and
inputting the hidden feature to the mask output layer to perform feature combination on the hidden feature, to obtain the target mask;
wherein preferably:
the mask estimation network layer comprises a first mask estimation network layer, a second mask estimation network layer, and a third mask estimation network layer; and
the inputting the target audio feature to the mask estimation network layer, and performing, by the mask estimation network layer, mask estimation on the target audio feature to obtain a hidden feature corresponding to the target audio feature comprises:
inputting the target audio feature to the first mask estimation network layer to output a first intermediate feature;
concatenating the first intermediate feature and the target audio feature based on a skip connection layer between the first mask estimation network layer and the second mask estimation network layer to obtain a second intermediate feature, and inputting the second intermediate feature to the second mask estimation network layer to output a third intermediate feature;
concatenating the third intermediate feature, the target audio feature, and the first intermediate feature, based on a skip connection layer between the first mask estimation network layer and the third mask estimation network layer and a skip connection layer between the second mask estimation network layer and the third mask estimation network layer, to obtain a fourth intermediate feature; and
inputting the fourth intermediate feature to the third mask estimation network layer to output the hidden feature.

9. The method according to claim 1, further comprising:
performing interpolation on the target mask to obtain an interpolation mask, a length of the interpolation mask being the same as a length of the current audio frame;
performing inverse Fourier transform on a product of the interpolation mask and the current audio frame, to obtain target audio data, the target audio data being audio data with noise suppressed in the current audio frame; and
determining, based on target audio data corresponding to each of audio frames associated with the raw audio data, enhanced audio data corresponding to the raw audio data.

10. An audio data processing method, performed by a computer device and comprising:
obtaining a current sample audio frame and K historical sample audio frames that are associated with sample audio data, and obtaining a sample mask corresponding to the current sample audio frame, the current sample audio frame and the K historical sample audio frames being spectral frames, each of the K historical sample audio frames preceding the current sample audio frame in time domain, and K being a positive integer;
determining N sample cepstrum coefficients of the current sample audio frame, N being a positive integer greater than 1;
determining, based on the N sample cepstrum coefficients, M sample first-order time derivatives and M sample second-order time derivatives that are associated with the current sample audio frame, M being a positive integer less than N;
obtaining N historical sample cepstrum coefficients corresponding to each of the K historical sample audio frames, and determining, based on obtained K×N historical sample cepstrum coefficients, a sample dynamic spectrum feature associated with the current sample audio frame;
inputting the N sample cepstrum coefficients, the M sample first-order time derivatives, the M sample second-order time derivatives, and the sample dynamic spectrum feature to an initial mask estimation model to output a predicted mask corresponding to the current sample audio frame; and
performing iterative training on the initial mask estimation model based on the predicted mask and the sample mask to obtain a target mask estimation model, the target mask estimation model being used for outputting a target mask corresponding to a current audio frame associated with raw audio data, and the target mask being used for suppressing noise data in the raw audio data.

11. An audio data processing apparatus, comprising:
a first obtaining module, configured to obtain a current audio frame and K historical audio frames that are associated with raw audio data, the current audio frame and the K historical audio frames being spectral frames, each of the K historical audio frames preceding the current audio frame in time domain, and K being a positive integer;
a second obtaining module, configured to: determine N cepstrum coefficients of the current audio frame, N being a positive integer greater than 1; determine, based on the N cepstrum coefficients, M first-order time derivatives and M second-order time derivatives that are associated with the current audio frame, M being a positive integer less than N;
a third obtaining module, configured to obtain N historical cepstrum coefficients corresponding to each of the K historical audio frames, and determine, based on obtained K×N historical cepstrum coefficients, a dynamic spectrum feature associated with the current audio frame; and
a mask estimation module, configured to input the N cepstrum coefficients, the M first-order time derivatives, the M second-order time derivatives, and the dynamic spectrum feature to a target mask estimation model to output a target mask corresponding to the current audio frame, the target mask being used for suppressing noise data in the raw audio data.

12. An audio data processing apparatus, comprising:
a first obtaining module, configured to obtain a current sample audio frame and K historical sample audio frames that are associated with sample audio data, and obtaining a sample mask corresponding to the current sample audio frame, the current sample audio frame and the K historical sample audio frames being spectral frames, each of the K historical sample audio frames preceding the current sample audio frame in time domain, and K being a positive integer;
a second obtaining module, configured to: determine N sample cepstrum coefficients of the current sample audio frame, N being a positive integer greater than 1; determine, based on the N sample cepstrum coefficients, M sample first-order time derivatives and M sample second-order time derivatives that are associated with the current sample audio frame, M being a positive integer less than N;
a third obtaining module, configured to obtain N historical sample cepstrum coefficients corresponding to each of the K historical sample audio frames, and determine, based on obtained K×N historical sample cepstrum coefficients, a sample dynamic spectrum feature associated with the current sample audio frame;
a mask prediction module, configured to input the N sample cepstrum coefficients, the M sample first-order time derivatives, the M sample second-order time derivatives, and the sample dynamic spectrum feature to an initial mask estimation model to output a predicted mask corresponding to the current sample audio frame; and
a model training module, configured to perform iterative training on the initial mask estimation model based on the predicted mask and the sample mask to obtain a target mask estimation model, the target mask estimation model being used for outputting a target mask corresponding to a current audio frame associated with raw audio data, and the target mask being used for suppressing noise data in the raw audio data to obtain enhanced audio data corresponding to the raw audio data.

13. A computer device, comprising: a processor and a memory,
the processor being connected to the memory, the memory being configured to store a computer program, and the processor being configured to invoke the computer program, so that the computer device performs the method according to any one of claims 1 to 10.

14. A computer-readable storage medium, the computer-readable storage medium storing a computer program, and the computer program being suitable for being loaded and executed by a processor, so that a computer device having the processor performs the method according to any one of claims 1 to 10.

15. A computer program product, the computer program product comprising computer instructions, and the computer instructions being stored in a computer-readable storage medium and suitable for being loaded and executed by a processor, so that a computer device having the processor performs the method according to any one of claims 1 to 10.

## Patentansprüche

1. Audiodatenverarbeitungsverfahren, das von einer Computervorrichtung ausführbar ist und Folgendes umfasst:
Erhalten eines aktuellen Audiorahmens und von K historischen Audiorahmen, die mit Rohaudiodaten assoziiert sind, wobei der aktuelle Audiorahmen und die K historischen Audiorahmen Spektralrahmen sind, jeder der K historischen Audiorahmen dem aktuellen Audiorahmen im Zeitbereich vorausgeht und K eine positive ganze Zahl ist;
Bestimmen von N Cepstrum-Koeffizienten des aktuellen Audiorahmens, wobei N eine positive ganze Zahl größer als 1 ist;
Bestimmen, basierend auf den N Cepstrum-Koeffizienten, von M zeitlichen Ableitungen erster Ordnung und M zeitlichen Ableitungen zweiter Ordnung, die mit dem aktuellen Audiorahmen assoziiert sind, wobei M eine positive ganze Zahl kleiner als N ist;
Erhalten von N historischen Cepstrum-Koeffizienten, die jedem der K historischen Audiorahmen entsprechen, und Bestimmen, basierend auf den erhaltenen K×N historischen Cepstrum-Koeffizienten, eines dynamischen Spektrummerkmals, das mit dem aktuellen Audiorahmen assoziiert ist; und
Eingeben der N Cepstrum-Koeffizienten, der M zeitlichen Ableitungen erster Ordnung, der M zeitlichen Ableitungen zweiter Ordnung und des dynamischen Spektrummerkmals in ein Ziel-Maskenschätzmodell, um eine Zielmaske auszugeben, die dem aktuellen Audiorahmen entspricht, wobei die Zielmaske zum Unterdrücken von Rauschdaten in den Rohaudiodaten verwendet wird.

2. Verfahren nach Anspruch 1, wobei das Erhalten eines aktuellen Audiorahmens und von K historischen Audiorahmen, die mit Rohaudiodaten assoziiert sind, Folgendes umfasst:
Teilen der Rohaudiodaten in H Audiodatensegmente unter Verwendung einer Fensterfunktion, wobei H eine positive ganze Zahl größer als 1 ist;
für jedes der H Audiodatensegmente, Durchführen einer Zeit-Frequenz-Transformation an dem jeweiligen Audiodatensegment, um einen Audiorahmen zu erhalten; und
Bestimmen, aus den erhaltenen H Audiorahmen, des aktuellen Audiorahmens und der K historischen Audiorahmen, die dem aktuellen Audiorahmen vorausgehen, wobei K kleiner als H ist.

3. Verfahren nach Anspruch 2, wobei das Durchführen einer Zeit-Frequenz-Transformation an dem jeweiligen Audiodatensegment, um einen Audiorahmen zu erhalten, Folgendes umfasst:
Durchführen einer Fourier-Transformation an dem jeweiligen Audiodatensegment, um ein Gleichstromkomponenten-Frequenzfach und 2S Frequenzfächer im Frequenzbereich zu erhalten, wobei die 2S Frequenzfächer erste S Frequenzfächer, die sich auf einen ersten Frequenzfachtyp beziehen, und zweite S Frequenzfächer, die sich auf einen zweiten Frequenzfachtyp beziehen, umfassen und S eine positive ganze Zahl ist; und
Bestimmen, basierend auf den ersten S Frequenzfächern und dem Gleichstromkomponenten-Frequenzfach, des Audiorahmens, der dem jeweiligen Audiodatensegment entspricht.

4. Verfahren nach Anspruch 1, wobei der aktuelle Audiorahmen S1 Frequenzfächer umfasst, die S1 Frequenzfächer ein Gleichstromkomponenten-Frequenzfach und S2 Frequenzfächer, die sich auf einen Frequenzfachtyp beziehen, umfassen und sowohl S1 als auch S2 positive ganze Zahlen sind; und das Bestimmen der N Cepstrum-Koeffizienten des aktuellen Audiorahmens Folgendes umfasst:
Abbilden der S1 Frequenzfächer auf N akustische Bänder, wobei S1 größer oder gleich N ist; und
für jedes der N akustischen Bänder, Durchführen einer Cepstrum-Verarbeitung an dem jeweiligen akustischen Band, um einen Ziel-Cepstrum-Koeffizienten zu erhalten.

5. Verfahren nach Anspruch 4, wobei das Durchführen einer Cepstrum-Verarbeitung an dem jeweiligen akustischen Band, um einen Ziel-Cepstrum-Koeffizienten zu erhalten, Folgendes umfasst:
Bestimmen der ursprünglichen Bandenergie des jeweiligen akustischen Bands;
Durchführen einer logarithmischen Transformation an der ursprünglichen Bandenergie, um die logarithmische Bandenergie des jeweiligen akustischen Bands zu erhalten; und
Durchführen einer diskreten Kosinustransformation an der logarithmischen Bandenergie, um den Ziel-Cepstrum-Koeffizienten zu erhalten.

6. Verfahren nach Anspruch 1, wobei das Bestimmen, basierend auf den N Cepstrum-Koeffizienten, von M zeitlichen Ableitungen erster Ordnung und M zeitlichen Ableitungen zweiter Ordnung, die mit dem aktuellen Audiorahmen assoziiert sind, Folgendes umfasst:
Durchführen einer ersten Differentialoperation an den N Cepstrum-Koeffizienten, um (N-1) Differentialoperationswerte zu erhalten, wobei jeder der (N-1) Differentialoperationswerte als eine zeitliche Ableitung erster Ordnung verwendet wird;
Erhalten, aus den (N-1) zeitlichen Ableitungen erster Ordnung, der M zeitlichen Ableitungen erster Ordnung;
Durchführen einer sekundären Differentialoperation an den (N-1) zeitlichen Ableitungen erster Ordnung, um (N-2) Differentialoperationswerte zu erhalten, wobei jeder der (N-2) Differentialoperationswerte als eine zeitliche Ableitung zweiter Ordnung verwendet wird; und
Erhalten, aus den (N-2) zeitlichen Ableitungen zweiter Ordnung, der M zeitlichen Ableitungen zweiter Ordnung.

7. Verfahren nach Anspruch 1, wobei das Erhalten von N historischen Cepstrum-Koeffizienten, die jedem der K historischen Audiorahmen entsprechen, Folgendes umfasst:
Erhalten von zwei beliebigen benachbarten historischen Audiorahmen aus den K historischen Audiorahmen als einen ersten historischen Audiorahmen und einen zweiten historischen Audiorahmen; und
Erhalten, aus einem Cache, der mit dem aktuellen Audiorahmen zusammenhängt, von ersten N historischen Cepstrum-Koeffizienten, die dem ersten historischen Audiorahmen entsprechen, und von zweiten N historischen Cepstrum-Koeffizienten, die dem zweiten historischen Audiorahmen entsprechen;
wobei vorzugsweise:
das Bestimmen, basierend auf den erhaltenen K×N historischen Cepstrum-Koeffizienten, eines dynamischen Spektrummerkmals, das mit dem aktuellen Audiorahmen assoziiert ist, Folgendes umfasst:
für zwei beliebige benachbarte historische Audiorahmen aus den K historischen Audiorahmen, Verwenden von N Differenzwerten jeweils zwischen den ersten N historischen Cepstrum-Koeffizienten und den zweiten N historischen Cepstrum-Koeffizienten als einen Zwischenrahmen-Differenzwert zwischen dem ersten historischen Audiorahmen und dem zweiten historischen Audiorahmen; und
Bestimmen des dynamischen Spektrummerkmals basierend auf K-1 Zwischenrahmen-Differenzwerten zwischen benachbarten historischen Audiorahmen in den K historischen Audiorahmen.

8. Verfahren nach Anspruch 1, wobei das Ziel-Maskenschätzmodell eine Maskenschätzungs-Netzwerkschicht und eine Maskenausgabeschicht umfasst; und
das Eingeben der N Cepstrum-Koeffizienten, der M zeitlichen Ableitungen erster Ordnung, der M zeitlichen Ableitungen zweiter Ordnung und des dynamischen Spektrummerkmals in ein Ziel-Maskenschätzmodell, wobei das Ziel-Maskenschätzmodell eine Zielmaske ausgibt, die dem aktuellen Audiorahmen entspricht, Folgendes umfasst:
Verwenden der N Cepstrum-Koeffizienten, der M zeitlichen Ableitungen erster Ordnung, der M zeitlichen Ableitungen zweiter Ordnung und des dynamischen Spektrummerkmals als ein Ziel-Audiomerkmal des aktuellen Audiorahmens, Eingeben des Ziel-Audiomerkmals in die Maskenschätzungs-Netzwerkschicht, um eine Maskenschätzung an dem Ziel-Audiomerkmal durchzuführen, um ein verborgenes Merkmal zu erhalten, das dem Ziel-Audiomerkmal entspricht; und
Eingeben des verborgenen Merkmals in die Maskenausgabeschicht, um eine Merkmalskombination an dem verborgenen Merkmal durchzuführen, um die Zielmaske zu erhalten;
wobei vorzugsweise:
die Maskenschätzungs-Netzwerkschicht eine erste Maskenschätzungs-Netzwerkschicht, eine zweite Maskenschätzungs-Netzwerkschicht und eine dritte Maskenschätzungs-Netzwerkschicht umfasst; und
das Eingeben des Ziel-Audiomerkmals in die Maskenschätzungs-Netzwerkschicht und das Durchführen, durch die Maskenschätzungs-Netzwerkschicht, einer Maskenschätzung an dem Ziel-Audiomerkmal, um ein verborgenes Merkmal zu erhalten, das dem Ziel-Audiomerkmal entspricht, Folgendes umfasst:
Eingeben des Ziel-Audiomerkmals in die erste Maskenschätzungs-Netzwerkschicht, um ein erstes Zwischenmerkmal auszugeben;
Verketten des ersten Zwischenmerkmals und des Ziel-Audiomerkmals basierend auf einer Sprungverbindungsschicht zwischen der ersten Maskenschätzungs-Netzwerkschicht und der zweiten Maskenschätzungs-Netzwerkschicht, um ein zweites Zwischenmerkmal zu erhalten, und Eingeben des zweiten Zwischenmerkmals in die zweite Maskenschätzungs-Netzwerkschicht, um ein drittes Zwischenmerkmal auszugeben;
Verketten des dritten Zwischenmerkmals, des Ziel-Audiomerkmals und des ersten Zwischenmerkmals, basierend auf einer Sprungverbindungsschicht zwischen der ersten Maskenschätzungs-Netzwerkschicht und der dritten Maskenschätzungs-Netzwerkschicht und einer Sprungverbindungsschicht zwischen der zweiten Maskenschätzungs-Netzwerkschicht und der dritten Maskenschätzungs-Netzwerkschicht, um ein viertes Zwischenmerkmal zu erhalten; und
Eingeben des vierten Zwischenmerkmals in die dritte Maskenschätzungs-Netzwerkschicht, um das verborgene Merkmal auszugeben.

9. Verfahren nach Anspruch 1, ferner umfassend:
Durchführen einer Interpolation an der Zielmaske, um eine Interpolationsmaske zu erhalten, wobei eine Länge der Interpolationsmaske gleich einer Länge des aktuellen Audiorahmens ist;
Durchführen einer inversen Fourier-Transformation an einem Produkt der Interpolationsmaske und des aktuellen Audiorahmens, um Ziel-Audiodaten zu erhalten, wobei die Ziel-Audiodaten Audiodaten mit unterdrücktem Rauschen im aktuellen Audiorahmen sind; und
Bestimmen, basierend auf Ziel-Audiodaten, die jedem der mit den Rohaudiodaten assoziierten Audiorahmen entsprechen, von verbesserten Audiodaten, die den Rohaudiodaten entsprechen.

10. Audiodatenverarbeitungsverfahren, das von einer Computervorrichtung ausgeführt wird und Folgendes umfasst:
Erhalten eines aktuellen Proben-Audiorahmens und von K historischen Proben-Audiorahmen, die mit Proben-Audiodaten assoziiert sind, und Erhalten einer Probenmaske, die dem aktuellen Proben-Audiorahmen entspricht, wobei der aktuelle Proben-Audiorahmen und die K historischen Proben-Audiorahmen Spektralrahmen sind, jeder der K historischen Proben-Audiorahmen dem aktuellen Proben-Audiorahmen im Zeitbereich vorausgeht und K eine positive ganze Zahl ist;
Bestimmen von N Proben-Cepstrum-Koeffizienten des aktuellen Proben-Audiorahmens, wobei N eine positive ganze Zahl größer als 1 ist;
Bestimmen, basierend auf den N Proben-Cepstrum-Koeffizienten, von M zeitlichen Proben-Ableitungen erster Ordnung und M zeitlichen Proben-Ableitungen zweiter Ordnung, die mit dem aktuellen Proben-Audiorahmen assoziiert sind, wobei M eine positive ganze Zahl kleiner als N ist;
Erhalten von N historischen Proben-Cepstrum-Koeffizienten, die jedem der K historischen Proben-Audiorahmen entsprechen, und Bestimmen, basierend auf den erhaltenen K×N historischen Proben-Cepstrum-Koeffizienten, eines dynamischen Proben-Spektrummerkmals, das mit dem aktuellen Proben-Audiorahmen assoziiert ist;
Eingeben der N Proben-Cepstrum-Koeffizienten, der M zeitlichen Proben-Ableitungen erster Ordnung, der M zeitlichen Proben-Ableitungen zweiter Ordnung und des dynamischen Proben-Spektrummerkmals in ein anfängliches Maskenschätzmodell, um eine vorhergesagte Maske auszugeben, die dem aktuellen Proben-Audiorahmen entspricht; und
Durchführen eines iterativen Trainings an dem anfänglichen Maskenschätzmodell basierend auf der vorhergesagten Maske und der Probenmaske, um ein Ziel-Maskenschätzmodell zu erhalten, wobei das Ziel-Maskenschätzmodell zum Ausgeben einer Zielmaske verwendet wird, die einem aktuellen Audiorahmen entspricht, der mit Rohaudiodaten assoziiert ist, und die Zielmaske zum Unterdrücken von Rauschdaten in den Rohaudiodaten verwendet wird.

11. Audiodatenverarbeitungsvorrichtung, umfassend:
ein erstes Erhaltungsmodul, das konfiguriert ist zum Erhalten eines aktuellen Audiorahmens und von K historischen Audiorahmen, die mit Rohaudiodaten assoziiert sind, wobei der aktuelle Audiorahmen und die K historischen Audiorahmen Spektralrahmen sind, jeder der K historischen Audiorahmen dem aktuellen Audiorahmen im Zeitbereich vorausgeht und K eine positive ganze Zahl ist;
ein zweites Erhaltungsmodul, das konfiguriert ist zum: Bestimmen von N Cepstrum-Koeffizienten des aktuellen Audiorahmens, wobei N eine positive ganze Zahl größer als 1 ist; Bestimmen, basierend auf den N Cepstrum-Koeffizienten, von M zeitlichen Ableitungen erster Ordnung und M zeitlichen Ableitungen zweiter Ordnung, die mit dem aktuellen Audiorahmen assoziiert sind, wobei M eine positive ganze Zahl kleiner als N ist;
ein drittes Erhaltungsmodul, das konfiguriert ist zum Erhalten von N historischen Cepstrum-Koeffizienten, die jedem der K historischen Audiorahmen entsprechen, und Bestimmen, basierend auf den erhaltenen K×N historischen Cepstrum-Koeffizienten, eines dynamischen Spektrummerkmals, das mit dem aktuellen Audiorahmen assoziiert ist; und
ein Maskenschätzmodul, das konfiguriert ist zum Eingeben der N Cepstrum-Koeffizienten, der M zeitlichen Ableitungen erster Ordnung, der M zeitlichen Ableitungen zweiter Ordnung und des dynamischen Spektrummerkmals in ein Ziel-Maskenschätzmodell, um eine Zielmaske auszugeben, die dem aktuellen Audiorahmen entspricht, wobei die Zielmaske zum Unterdrücken von Rauschdaten in den Rohaudiodaten verwendet wird.

12. Audiodatenverarbeitungsvorrichtung, umfassend:
ein erstes Erhaltungsmodul, das konfiguriert ist zum Erhalten eines aktuellen Proben-Audiorahmens und von K historischen Proben-Audiorahmen, die mit Proben-Audiodaten assoziiert sind, und Erhalten einer Probenmaske, die dem aktuellen Proben-Audiorahmen entspricht, wobei der aktuelle Proben-Audiorahmen und die K historischen Proben-Audiorahmen Spektralrahmen sind, jeder der K historischen Proben-Audiorahmen dem aktuellen Proben-Audiorahmen im Zeitbereich vorausgeht und K eine positive ganze Zahl ist;
ein zweites Erhaltungsmodul, das konfiguriert ist zum: Bestimmen von N Proben-Cepstrum-Koeffizienten des aktuellen Proben-Audiorahmens, wobei N eine positive ganze Zahl größer als 1 ist; Bestimmen, basierend auf den N Proben-Cepstrum-Koeffizienten, von M zeitlichen Proben-Ableitungen erster Ordnung und M zeitlichen Proben-Ableitungen zweiter Ordnung, die mit dem aktuellen Proben-Audiorahmen assoziiert sind, wobei M eine positive ganze Zahl kleiner als N ist;
ein drittes Erhaltungsmodul, das konfiguriert ist zum Erhalten von N historischen Proben-Cepstrum-Koeffizienten, die jedem der K historischen Proben-Audiorahmen entsprechen, und Bestimmen, basierend auf den erhaltenen K×N historischen Proben-Cepstrum-Koeffizienten, eines dynamischen Proben-Spektrummerkmals, das mit dem aktuellen Proben-Audiorahmen assoziiert ist;
ein Maskenvorhersagemodul, das konfiguriert ist zum Eingeben der N Proben-Cepstrum-Koeffizienten, der M zeitlichen Proben-Ableitungen erster Ordnung, der M zeitlichen Proben-Ableitungen zweiter Ordnung und des dynamischen Proben-Spektrummerkmals in ein anfängliches Maskenschätzmodell, um eine vorhergesagte Maske auszugeben, die dem aktuellen Proben-Audiorahmen entspricht; und
ein Modelltrainingsmodul, das konfiguriert ist zum Durchführen eines iterativen Trainings an dem anfänglichen Maskenschätzmodell basierend auf der vorhergesagten Maske und der Probenmaske, um ein Ziel-Maskenschätzmodell zu erhalten, wobei das Ziel-Maskenschätzmodell zum Ausgeben einer Zielmaske verwendet wird, die einem aktuellen Audiorahmen entspricht, der mit Rohaudiodaten assoziiert ist, und die Zielmaske zum Unterdrücken von Rauschdaten in den Rohaudiodaten verwendet wird, um verbesserte Audiodaten zu erhalten, die den Rohaudiodaten entsprechen.

13. Computervorrichtung, umfassend: einen Prozessor und einen Speicher,
wobei der Prozessor mit dem Speicher verbunden ist, der Speicher konfiguriert ist zum Speichern eines Computerprogramms und der Prozessor konfiguriert ist zum Aufrufen des Computerprogramms, sodass die Computervorrichtung das Verfahren nach einem der Ansprüche 1 bis 10 ausführt.

14. Computerlesbares Speichermedium, wobei das computerlesbare Speichermedium ein Computerprogramm speichert und das Computerprogramm geeignet ist zum Laden und Ausführen durch einen Prozessor, sodass eine Computervorrichtung mit dem Prozessor das Verfahren nach einem der Ansprüche 1 bis 10 ausführt.

15. Computerprogrammprodukt, wobei das Computerprogrammprodukt Computeranweisungen umfasst und die Computeranweisungen in einem computerlesbaren Speichermedium gespeichert und geeignet sind zum Laden und Ausführen durch einen Prozessor, sodass eine Computervorrichtung mit dem Prozessor das Verfahren nach einem der Ansprüche 1 bis 10 ausführt.

## Revendications

1. Procédé de traitement de données audio, exécutable par un dispositif informatique et comprenant :
l'obtention d'une trame audio courante et de K trames audio historiques qui sont associées à des données audio brutes, la trame audio courante et les K trames audio historiques étant des trames spectrales, chacune des K trames audio historiques précédant la trame audio courante dans le domaine temporel, et K étant un nombre entier positif ;
la détermination de N coefficients cepstraux de la trame audio courante, N étant un nombre entier positif supérieur à 1 ;
la détermination, sur la base des N coefficients cepstraux, de M dérivées temporelles de premier ordre et de M dérivées temporelles de second ordre qui sont associées à la trame audio courante, M étant un nombre entier positif inférieur à N ;
l'obtention de N coefficients cepstraux historiques correspondant à chacune des K trames audio historiques, et la détermination, sur la base des K×N coefficients cepstraux historiques obtenus, d'une caractéristique de spectre dynamique associée à la trame audio courante ; et
l'entrée des N coefficients cepstraux, des M dérivées temporelles de premier ordre, des M dérivées temporelles de second ordre et de la caractéristique de spectre dynamique dans un modèle d'estimation de masque cible pour produire en sortie un masque cible correspondant à la trame audio courante, le masque cible étant utilisé pour supprimer des données de bruit dans les données audio brutes.

2. Procédé selon la revendication 1, dans lequel l'obtention d'une trame audio courante et de K trames audio historiques qui sont associées à des données audio brutes comprend :
la division des données audio brutes en H segments de données audio en utilisant une fonction de fenêtrage, H étant un nombre entier positif supérieur à 1 ;
pour chacun des H segments de données audio, la réalisation d'une transformée temps-fréquence sur le segment de données audio respectif pour obtenir une trame audio ; et
la détermination, à partir des H trames audio obtenues, de la trame audio courante et des K trames audio historiques précédant la trame audio courante, K étant inférieur à H.

3. Procédé selon la revendication 2, dans lequel la réalisation d'une transformée temps-fréquence sur le segment de données audio respectif pour obtenir une trame audio comprend :
la réalisation d'une transformée de Fourier sur le segment de données audio respectif pour obtenir une case de fréquence de composante continue et 2S cases de fréquence dans le domaine fréquentiel, les 2S cases de fréquence comprenant S premières cases de fréquence liées à un premier type de case de fréquence et S secondes cases de fréquence liées à un second type de case de fréquence, et S étant un nombre entier positif ; et
la détermination, sur la base des S premières cases de fréquence et de la case de fréquence de composante continue, de la trame audio correspondant au segment de données audio respectif.

4. Procédé selon la revendication 1, dans lequel la trame audio courante comprend S1 cases de fréquence, les S1 cases de fréquence comprenant une case de fréquence de composante continue et S2 cases de fréquence liées à un type de case de fréquence, et S1 et S2 étant tous deux des nombres entiers positifs ; et la détermination des N coefficients cepstraux de la trame audio courante comprend :
le mappage des S1 cases de fréquence vers N bandes acoustiques, S1 étant supérieur ou égal à N ; et
pour chacune des N bandes acoustiques, la réalisation d'un traitement cepstral sur la bande acoustique respective pour obtenir un coefficient cepstral cible.

5. Procédé selon la revendication 4, dans lequel la réalisation d'un traitement cepstral sur la bande acoustique respective pour obtenir un coefficient cepstral cible comprend :
la détermination de l'énergie de bande originale de la bande acoustique respective ;
la réalisation d'une transformée logarithmique sur l'énergie de bande originale pour obtenir l'énergie de bande logarithmique de la bande acoustique respective ; et
la réalisation d'une transformée en cosinus discrète sur l'énergie de bande logarithmique pour obtenir le coefficient cepstral cible.

6. Procédé selon la revendication 1, dans lequel la détermination, sur la base des N coefficients cepstraux, de M dérivées temporelles de premier ordre et de M dérivées temporelles de second ordre qui sont associées à la trame audio courante comprend :
la réalisation d'une première opération différentielle sur les N coefficients cepstraux pour obtenir (N-1) valeurs d'opération différentielle, en utilisant chacune des (N-1) valeurs d'opération différentielle comme une dérivée temporelle de premier ordre ;
l'obtention, à partir des (N-1) dérivées temporelles de premier ordre, des M dérivées temporelles de premier ordre ;
la réalisation d'une opération différentielle secondaire sur les (N-1) dérivées temporelles de premier ordre pour obtenir (N-2) valeurs d'opération différentielle, en utilisant chacune des (N-2) valeurs d'opération différentielle comme une dérivée temporelle de second ordre ; et
l'obtention, à partir des (N-2) dérivées temporelles de second ordre, des M dérivées temporelles de second ordre.

7. Procédé selon la revendication 1, dans lequel l'obtention de N coefficients cepstraux historiques correspondant à chacune des K trames audio historiques comprend :
l'obtention de deux trames audio historiques adjacentes quelconques parmi les K trames audio historiques en tant que première trame audio historique et seconde trame audio historique ; et
l'obtention, à partir d'un cache lié à la trame audio courante, de N premiers coefficients cepstraux historiques correspondant à la première trame audio historique et de N seconds coefficients cepstraux historiques correspondant à la seconde trame audio historique ;
dans lequel, de préférence :
la détermination, sur la base des K×N coefficients cepstraux historiques obtenus, d'une caractéristique de spectre dynamique associée à la trame audio courante comprend :
pour deux trames audio historiques adjacentes quelconques parmi les K trames audio historiques, l'utilisation de N valeurs de différence respectivement entre les N premiers coefficients cepstraux historiques et les N seconds coefficients cepstraux historiques comme une valeur de différence inter-trames entre la première trame audio historique et la seconde trame audio historique ; et
la détermination de la caractéristique de spectre dynamique sur la base de K-1 valeurs de différence inter-trames entre des trames audio historiques adjacentes dans les K trames audio historiques.

8. Procédé selon la revendication 1, dans lequel le modèle d'estimation de masque cible comprend une couche de réseau d'estimation de masque et une couche de sortie de masque ; et
l'entrée des N coefficients cepstraux, des M dérivées temporelles de premier ordre, des M dérivées temporelles de second ordre et de la caractéristique de spectre dynamique dans un modèle d'estimation de masque cible, le modèle d'estimation de masque cible produisant en sortie un masque cible correspondant à la trame audio courante comprend :
l'utilisation des N coefficients cepstraux, des M dérivées temporelles de premier ordre, des M dérivées temporelles de second ordre et de la caractéristique de spectre dynamique comme une caractéristique audio cible de la trame audio courante, l'entrée de la caractéristique audio cible dans la couche de réseau d'estimation de masque pour réaliser une estimation de masque sur la caractéristique audio cible, pour obtenir une caractéristique cachée correspondant à la caractéristique audio cible ; et
l'entrée de la caractéristique cachée dans la couche de sortie de masque pour réaliser une combinaison de caractéristiques sur la caractéristique cachée, pour obtenir le masque cible ;
dans lequel, de préférence :
la couche de réseau d'estimation de masque comprend une première couche de réseau d'estimation de masque, une seconde couche de réseau d'estimation de masque et une troisième couche de réseau d'estimation de masque ; et
l'entrée de la caractéristique audio cible dans la couche de réseau d'estimation de masque, et la réalisation, par la couche de réseau d'estimation de masque, d'une estimation de masque sur la caractéristique audio cible pour obtenir une caractéristique cachée correspondant à la caractéristique audio cible comprend :
l'entrée de la caractéristique audio cible dans la première couche de réseau d'estimation de masque pour produire en sortie une première caractéristique intermédiaire ;
la concaténation de la première caractéristique intermédiaire et de la caractéristique audio cible sur la base d'une couche de connexion de saut entre la première couche de réseau d'estimation de masque et la seconde couche de réseau d'estimation de masque pour obtenir une seconde caractéristique intermédiaire, et l'entrée de la seconde caractéristique intermédiaire dans la seconde couche de réseau d'estimation de masque pour produire en sortie une troisième caractéristique intermédiaire ;
la concaténation de la troisième caractéristique intermédiaire, de la caractéristique audio cible et de la première caractéristique intermédiaire, sur la base d'une couche de connexion de saut entre la première couche de réseau d'estimation de masque et la troisième couche de réseau d'estimation de masque et d'une couche de connexion de saut entre la seconde couche de réseau d'estimation de masque et la troisième couche de réseau d'estimation de masque, pour obtenir une quatrième caractéristique intermédiaire ; et
l'entrée de la quatrième caractéristique intermédiaire dans la troisième couche de réseau d'estimation de masque pour produire en sortie la caractéristique cachée.

9. Procédé selon la revendication 1, comprenant en outre :
la réalisation d'une interpolation sur le masque cible pour obtenir un masque d'interpolation, une longueur du masque d'interpolation étant identique à une longueur de la trame audio courante ;
la réalisation d'une transformée de Fourier inverse sur un produit du masque d'interpolation et de la trame audio courante, pour obtenir des données audio cibles, les données audio cibles étant des données audio avec du bruit supprimé dans la trame audio courante ; et
la détermination, sur la base des données audio cibles correspondant à chacune des trames audio associées aux données audio brutes, de données audio améliorées correspondant aux données audio brutes.

10. Procédé de traitement de données audio, exécuté par un dispositif informatique et comprenant :
l'obtention d'une trame audio d'échantillon courante et de K trames audio d'échantillon historiques qui sont associées à des données audio d'échantillon, et l'obtention d'un masque d'échantillon correspondant à la trame audio d'échantillon courante, la trame audio d'échantillon courante et les K trames audio d'échantillon historiques étant des trames spectrales, chacune des K trames audio d'échantillon historiques précédant la trame audio d'échantillon courante dans le domaine temporel, et K étant un nombre entier positif ;
la détermination de N coefficients cepstraux d'échantillon de la trame audio d'échantillon courante, N étant un nombre entier positif supérieur à 1 ;
la détermination, sur la base des N coefficients cepstraux d'échantillon, de M dérivées temporelles de premier ordre d'échantillon et de M dérivées temporelles de second ordre d'échantillon qui sont associées à la trame audio d'échantillon courante, M étant un nombre entier positif inférieur à N ;
l'obtention de N coefficients cepstraux d'échantillon historiques correspondant à chacune des K trames audio d'échantillon historiques, et la détermination, sur la base des K×N coefficients cepstraux d'échantillon historiques obtenus, d'une caractéristique de spectre dynamique d'échantillon associée à la trame audio d'échantillon courante ;
l'entrée des N coefficients cepstraux d'échantillon, des M dérivées temporelles de premier ordre d'échantillon, des M dérivées temporelles de second ordre d'échantillon et de la caractéristique de spectre dynamique d'échantillon dans un modèle d'estimation de masque initial pour produire en sortie un masque prédit correspondant à la trame audio d'échantillon courante ; et
la réalisation d'un entraînement itératif sur le modèle d'estimation de masque initial sur la base du masque prédit et du masque d'échantillon pour obtenir un modèle d'estimation de masque cible, le modèle d'estimation de masque cible étant utilisé pour produire en sortie un masque cible correspondant à une trame audio courante associée à des données audio brutes, et le masque cible étant utilisé pour supprimer des données de bruit dans les données audio brutes.

11. Appareil de traitement de données audio, comprenant :
un premier module d'obtention, configuré pour obtenir une trame audio courante et K trames audio historiques qui sont associées à des données audio brutes, la trame audio courante et les K trames audio historiques étant des trames spectrales, chacune des K trames audio historiques précédant la trame audio courante dans le domaine temporel, et K étant un nombre entier positif ;
un deuxième module d'obtention, configuré pour : déterminer N coefficients cepstraux de la trame audio courante, N étant un nombre entier positif supérieur à 1 ; déterminer, sur la base des N coefficients cepstraux, M dérivées temporelles de premier ordre et M dérivées temporelles de second ordre qui sont associées à la trame audio courante, M étant un nombre entier positif inférieur à N ;
un troisième module d'obtention, configuré pour obtenir N coefficients cepstraux historiques correspondant à chacune des K trames audio historiques, et déterminer, sur la base des K×N coefficients cepstraux historiques obtenus, une caractéristique de spectre dynamique associée à la trame audio courante ; et
un module d'estimation de masque, configuré pour entrer les N coefficients cepstraux, les M dérivées temporelles de premier ordre, les M dérivées temporelles de second ordre et la caractéristique de spectre dynamique dans un modèle d'estimation de masque cible pour produire en sortie un masque cible correspondant à la trame audio courante, le masque cible étant utilisé pour supprimer des données de bruit dans les données audio brutes.

12. Appareil de traitement de données audio, comprenant :
un premier module d'obtention, configuré pour obtenir une trame audio d'échantillon courante et K trames audio d'échantillon historiques qui sont associées à des données audio d'échantillon, et obtenir un masque d'échantillon correspondant à la trame audio d'échantillon courante, la trame audio d'échantillon courante et les K trames audio d'échantillon historiques étant des trames spectrales, chacune des K trames audio d'échantillon historiques précédant la trame audio d'échantillon courante dans le domaine temporel, et K étant un nombre entier positif ;
un deuxième module d'obtention, configuré pour : déterminer N coefficients cepstraux d'échantillon de la trame audio d'échantillon courante, N étant un nombre entier positif supérieur à 1 ; déterminer, sur la base des N coefficients cepstraux d'échantillon, M dérivées temporelles de premier ordre d'échantillon et M dérivées temporelles de second ordre d'échantillon qui sont associées à la trame audio d'échantillon courante, M étant un nombre entier positif inférieur à N ;
un troisième module d'obtention, configuré pour obtenir N coefficients cepstraux d'échantillon historiques correspondant à chacune des K trames audio d'échantillon historiques, et déterminer, sur la base des K×N coefficients cepstraux d'échantillon historiques obtenus, une caractéristique de spectre dynamique d'échantillon associée à la trame audio d'échantillon courante ;
un module de prédiction de masque, configuré pour entrer les N coefficients cepstraux d'échantillon, les M dérivées temporelles de premier ordre d'échantillon, les M dérivées temporelles de second ordre d'échantillon et la caractéristique de spectre dynamique d'échantillon dans un modèle d'estimation de masque initial pour produire en sortie un masque prédit correspondant à la trame audio d'échantillon courante ; et
un module d'entraînement de modèle, configuré pour réaliser un entraînement itératif sur le modèle d'estimation de masque initial sur la base du masque prédit et du masque d'échantillon pour obtenir un modèle d'estimation de masque cible, le modèle d'estimation de masque cible étant utilisé pour produire en sortie un masque cible correspondant à une trame audio courante associée à des données audio brutes, et le masque cible étant utilisé pour supprimer des données de bruit dans les données audio brutes pour obtenir des données audio améliorées correspondant aux données audio brutes.

13. Dispositif informatique, comprenant : un processeur et une mémoire,
le processeur étant connecté à la mémoire, la mémoire étant configurée pour stocker un programme informatique, et le processeur étant configuré pour invoquer le programme informatique, de sorte que le dispositif informatique exécute le procédé selon l'une quelconque des revendications 1 à 10.

14. Support de stockage lisible par ordinateur, le support de stockage lisible par ordinateur stockant un programme informatique, et le programme informatique étant apte à être chargé et exécuté par un processeur, de sorte qu'un dispositif informatique ayant le processeur exécute le procédé selon l'une quelconque des revendications 1 à 10.

15. Produit de programme informatique, le produit de programme informatique comprenant des instructions informatiques, et les instructions informatiques étant stockées dans un support de stockage lisible par ordinateur et aptes à être chargées et exécutées par un processeur, de sorte qu'un dispositif informatique ayant le processeur exécute le procédé selon l'une quelconque des revendications 1 à 10.
